# EUROPÄISCHE PATENTSCHRIFT

(11) **EP 2 516 880 B1**
(45) Veröffentlichungstag und Bekanntmachung des Hinweises auf die Patenterteilung: **17.12.2014**
(21) Anmeldenummer: 10798740.6
(22) Anmeldetag: 23.12.2010
(51) Int. Cl.: F16D 65/097, F16D 65/092, F16D 66/02

(54) **SCHEIBENBREMSE FÜR EIN KRAFTFAHRZEUG UND BREMSBELAGANORDNUNG HIERFÜR**
DISC BRAKE FOR A MOTOR VEHICLE AND BRAKE PAD ASSEMBLY THEREFOR
FREIN À DISQUE POUR UN VÉHICULE AUTOMOBILE ET ENSEMBLE DE GARNITURE DE FREIN ASSOCIÉ

(30) Priorität: 23.12.2009 DE 102009060204
(43) Veröffentlichungstag der Anmeldung: 31.10.2012
(73) Patentinhaber: Lucas Automotive GmbH, 56070 Koblenz (DE)
(72) Erfinder: SCHROETER, Christian, 53489 Sinzig (DE); MADZGALLA, Frank, 56070 Koblenz (DE); HAUPT, Manfred, 56203 Höhr-Grenzhausen (DE); BECKER, Marco, 56651 Oberdürenbach (DE); LAUBENTHAL, Frank, 56814 Wirfus (DE); MALLMANN, Markus, 56291 Pfalzfeld (DE)
(74) Vertreter: Thum, Bernhard
(86) Internationale Anmeldenummer: PCT/EP2010/007920
(87) Internationale Veröffentlichungsnummer: WO 2011/076424

(56) Entgegenhaltungen:
- DE-A1-102009 006 285
- GB-A- 2 036 898
- US-A- 5 706 916
- US-A1- 2004 195 056

## Beschreibung

Die vorliegende Erfindung betrifft eine Scheibenbremse für ein Kraftfahrzeug, umfassend eine Führung, in der wenigstens eine Bremsbelaganordnung bremswirksam verlagerbar geführt ist, wobei die Bremsbelaganordnung einen Bremsbelagträger aufweist, an dem ein Fahrzeugbremsbelag angebracht ist, der mit einer Bremsscheibe zum Erzielen einer Bremswirkung in Wechselwirkung bringbar ist, wobei der Bremsbelagträger wenigstens eine Haltezunge aufweist und wobei die Führung wenigstens einen Aufnahmebereich aufweist, wobei die Haltezunge in dem wenigstens einen Aufnahmebereich in einer Betätigungsrichtung geführt aufnehmbar ist, wobei an der wenigstens einen Haltezunge eine Federanordnung angebracht ist, über die eine Rückstellkraft in Folge einer elastischen Deformation durch bremswirksame Auslenkung der Bremsbelaganordnung auf diese aufbringbar So eine Scheibenbremse is z.B. aus US-A-2004/195056 bekannt.

Derartige Scheibenbremsen sind aus dem Stand der Technik bekannt. So zeigt beispielsweise das Dokument DE 196 50 592 A1 eine derartige Scheibenbremse, bei der eine Bremsbelaganordnung mit einem plattenförmigen Bremsbelagträger und einem daran angeordneten Bremsbelag in der Führung der Scheibenbremse über eine Federanordnung gehalten ist. Die Federanordnung wird bei jeder Verlagerung der Bremsbelaganordnung elastisch deformiert. Die Federanordnung hält sich an einem Raststeg der Führung. Im Verschleißfall, d.h. dann, wenn der Bremsbelag aufgrund häufiger Bremsbetätigungen Abnutzungserscheinungen zeigt, wird die Federanordnung im Rahmen einer Verschleißkompensation ebenfalls elastisch deformiert. Dies hat allerdings den Nachteil, dass sich die Rückstellkräfte bei Bremsbetätigung gegenüber dem Verschleiß freien Ausführungszustand verschleißbedingt ändern können.

Eine ähnliche Anordnung zeigt auch das Dokument US 5,284,228. Auch bei diesem Dokument ist eine Federanordnung am Gehäuse der Scheibenbremse gelagert und drückt gegen den Bremsbelagträger.

Das Dokument US 2004/0195056 A1 zeigt eine Bremsbelaganordnung, bei der am Bremsbelagträger eine Federanordnung angebracht ist, die sich am Gehäuse der Scheibenbremse abstützt. Auch bei dieser Anordnung nimmt mit wachsendem Verschleiß und entsprechender Verschleißnachstellung die Federvorspannung zu. Das Dokument DE 102 38 734 A1 zeigt eine Scheibenbremse mit einer Bremsbelagfeder, die ein zusätzliches Bremsbelagführungselement erfordert. Die Feder ist kompliziert ausgebildet und baut relativ groß. Die zum Aufbringen der Federkräfte erforderlichen Federbügel sind verhältnismäßig ausladend. Führt man diese Federbögen kleiner aus, so leidet die Funktionsweise darunter.

Gleiches gilt für den Stand der Technik gemäß US 7,086,506 B2. Die bei diesem Dokument an dem Bremsbelagträger angebrachten Federelemente sind ebenfalls kompliziert ausgeführt und benötigen relativ viel Bauraum.

Es ist demgegenüber eine Aufgabe der vorliegenden Erfindung, eine Scheibenbremse und eine Bremsbelaganordnung hierfür bereitzustellen, die bei verhältnismäßig einfachem Aufbau eine definierte Funktionsweise aufweist. Insbesondere zielt die erfindungsgemäße Scheibenbremse auf eine klare Unterscheidung zwischen normaler Bremsbetätigung und Verschleißkompensation ab.

Diese Aufgabe wird durch eine Scheibenbremse der eingangs bezeichneten Art gelöst, bei der vorgesehen ist, dass die Federanordnung Federstützabschnitte aufweist, mit denen sich die Federanordnung unter Vorspannung in dem Aufnahmebereich abstützt, und dass die Federanordnung einen vorbestimmten Federweg vorgibt, der derart bemessen ist, dass er eine Bewegung des Bremsbelagträgers für eine Bremsenbetätigung ohne Belagverschleiß-Kompensation zulässt und derart, dass bei Aufbrauchen des vorbestimmten Federwegs die Bremsbelaganordnung zur Belagverschleiß-Kompensation in Anlage mit der Federanordnung gelangt und diese innerhalb der Führung belagverschleiß-kompensierend verlagert.

Die Erfindung sieht vor, dass eine normale Bremsenbetätigung im Rahmen des vorbestimmten Federwegs stattfindet, d.h. dass im Rahmen einer normalen Bremsenbetätigung bis hin zu einer Vollbremsung der vorbestimmte Federweg nicht aufgebraucht wird. Erst dann, wenn am Bremsbelag Verschleiß aufgetreten ist, der eine Belagverschleiß-Kompensation erfordert, d.h. dann, wenn sich der Bremsbelagträger in einem Scheibenbremsengehäuse oder Bremsträger der Scheibenbremse je nach Ausführung als Schwimmsattelbremse oder Festsattelbremse dauerhaft zur Bremsscheibe hin verlagern soll, gelangt die Bremsbelaganordnung in Anlage mit der Federanordnung, wobei kein weiterer Federweg mehr zur Verfügung steht. Steigt in diesem Zustand die Betätigungskraft zur Verlagerung der Bremsbelaganordnung weiter an, so wird die Bremsbelaganordnung in der Führung der Scheibenbremse zusammen mit der Federanordnung bleibend verlagert, bis der aufgetretene Verschleiß am Bremsbelag durch eine Nachrückbewegung kompensiert ist.

Die Erfindung schafft also durch das Vorgeben eines vorbestimmten Federwegs und die darauf folgende formschlüssige oder flächige Anlage von Bremsbelaganordnung und Federanordnung eine klare Unterscheidung zwischen einer normalen Bremsenbetätigung ohne Belagverschleiß-Kompensation, das heißt ohne Nachrücken, und einer Bremsenbetätigung mit Belagverschleiß-Kompensation. Dadurch erlangt die Erfindung einen wesentlichen Vorteil gegenüber dem Stand der Technik, bei dem häufig nicht definiert zwischen dem Zustand der normalen Bremsenbetätigung und dem Zustand der Bremsenbetätigung mit Belagverschleiß-Kompensation unterschieden werden kann.

Eine Weiterbildung der Erfindung sieht vor, dass die Federanordnung die Haltezunge umgreift, wobei die Federanordnung auf der dem Bremsbelag zugewandten Seite wenigstens einen Anlageabschnitt aufweist, der um den vorbestimmten Federweg von der Haltezunge beabstandet ist. Durch Bereitstellung eines Anlageabschnitts, der um den vorbestimmten Federweg von der Haltezunge beabstandet ist, lässt sich der Bewegungsspielraum der Bremsbelaganordnung eindeutig definieren.

Eine Weiterbildung der Erfindung sieht vor, dass zwischen dem Anlageabschnitt und der dem Bremsbelag zugewandten Seite der Federanordnung wenigstens ein Federmittel vorgesehen ist. Alternativ hierzu kann vorgesehen sein, dass zwischen dem Anlageabschnitt und der von dem Bremsbelag abgewandten Seite der Federanordnung wenigstens ein Federmittel vorgesehen ist.

Eine Ausführungsvariante der Erfindung sieht vor, dass das wenigstens eine Federmittel wenigstens einen an der Federanordnung, insbesondere am Anlageabschnitt, ausgebildeten Federbügel aufweist, der federnd an der Haltezunge anliegt. So ist es möglich, dass der wenigstens eine Federbügel von einer einstückig an der Federanordnung ausgebildeten oder an dieser kraftschlüssig oder formschlüssig befestigten, hervorstehenden Federlasche gebildet ist. Dabei kann vorgesehen sein, dass die Federlasche V-förmig ausgebildet ist. Die Federlasche kann dadurch federnd nachgeben, dass die V-förmige Spreizung durch Zusammendrücken vergrößert oder verringert wird.

Erfindungsgemäß kann ferner vorgesehen sein, dass die Haltezunge auf ihrer dem Bremsbelag zugewandten Seite mit einem Federhaltemittel, insbesondere mit einer Ausnehmung, versehen ist, an dem ein gesondertes Federelement angebracht ist, das sich an der Haltezunge sowie an der Federanordnung abstützt. So kann beispielsweise eine Sacklochbohrung im Bereich der Haltezunge vorgesehen sein, die zur Aufnahme von Federmitteln vorgesehen ist. Insbesondere es ist dabei möglich, dass das wenigstens eine Federmittel von einer Druckfeder oder einer Blattfeder gebildet ist, welche die Haltezunge zumindest teilweise durchsetzt. Alternativ zu einer Sacklochbohrung kann die Haltezunge in diesem Bereich auch vollständig durchsetzt sein, wobei ein bolzenartiges Federelement in den Durchbruch eingesetzt ist, welches sich auf der dem Bremsbelag zugewandten Seite aufspreizt, so dass sich zwei oder mehr Federlaschen bilden, die elastisch deformierbar sind.

Gemäß einer bevorzugten Ausführungsform der Erfindung kann die Federanordnung in Ausnehmungen formschlüssig oder kraftschlüssig aufgenommen sein, die an der wenigstens einen Haltezunge ausgebildet sind. So ist es beispielsweise möglich, an der orthogonal zur Bremsbelagsseite ausgerichteten Stirnfläche der Haltezunge entsprechende dem Querschnittsprofil der Federanordnung in diesem Bereich angepasste Ausnehmungen in der Haltezunge auszubilden, so dass die Federanordnung mit entsprechenden Abschnitten eingelegt bzw. eingedrückt und dann formschlüssig oder kraftschlüssig gehalten werden kann. Die Ausnehmungen können sich auch über benachbarte senkrecht zueinander verlaufenden Flächen erstrecken oder in Vorsprüngen an der Haltezunge ausgebildet sein.

Eine besonders kostengünstig herstellbare Ausführungsvariante ergibt sich beispielsweise dann, wenn die Federanordnung aus einem Federdraht gebildet wird. So ist es möglich, dass die Federanordnung von einer teilweise oder vollständig geschlossenen Federklammer gebildet ist. Bei dieser Ausführungsform kann die Federklammer also als mehrfach gekrümmter Federdraht ausgebildet sein und entsprechend die Haltezunge umschlingen bzw. umgreifen. Dabei ist es erfindungsgemäß möglich, dass der wenigstens eine Federbügel, der federnd an der Haltezunge anliegt, als schleifenförmiger Abschnitt der Federklammer ausgebildet ist.

Eine Weiterbildung der Erfindung sieht vor, dass die Federanordnung einen Federrücken aufweist, der federnd an der von dem Bremsbelag abgewandten Seite der Haltezunge anliegt. Dieser Federrücken kann beispielsweise bogenförmig gekrümmt ausgebildet sein, wobei er mit seinem Scheitelbereich am Bremsbelagträger anliegt. Der Federrücken kann aber auch im Wesentlichen geradlinig ausgebildet oder unterbrochen sein.

Eine Weiterbildung der Erfindung sieht vor, dass die Federstützabschnitte an dem Federrücken angebracht sind und sich ausgehend von diesem federnd aufspreizen. Diese Ausgestaltung hat den Vorteil, dass die Federstützabschnitte bereits unter Federvorspannung aufgrund ihrer Spreizung in dem Aufnahmebereich anliegen. Zum Zwecke der Montage müssen die Federstützabschnitte zur Reduzierung der Spreizung zusammengedrückt werden, um in den Aufnahmebereich eingeschoben werden zu können.

Erfindungsgemäß kann ferner vorgesehen sein, dass die Federanordnung wenigstens eine Federzunge aufweist, die die Haltezunge in der Federanordnung unter Vorspannung quer zur Betätigungsrichtung positioniert. Dadurch wird gewährleistet, dass der Bremsbelagträger über die Federzunge auch quer zur Betätigungsrichtung in einer vorbestimmten Position positioniert und gehalten wird. Die Federzunge kann beispielsweise an der Federanordnung einstückig angebracht oder nachträglich an dieser fixiert worden sein.

Eine Weiterbildung der Erfindung sieht eine Sensoranordnung vor, die die Federanordnung sowie den Bremsbelag zumindest teilweise durchsetzt, und die zur Bestimmung des Belagverschleißes ausgebildet ist. Mittels der Sensoranordnung lässt sich also der aktuelle Verschleißzustand bestimmen oder das Erreichen eines Verschleißniveaus, welches dazu Veranlassung gibt, den Fahrer auf das Erfordernis der Durchführung einer Wartung hinzuweisen.

Die Erfindung sieht in einem Ausführungsbeispiel ferner ein Stützelement vor, das an der Haltezunge fixiert ist und an der sich die Federanordnung federnd abstützt. Bei dieser Ausführungsvariante wird beispielsweise die Haltezunge von einem Durchbruch ersetzt. An diesem Durchbruch ist ein Bolzen mit einem Bolzenkopf vorgesehen, der von der dem Bremsbelag abgewandten Seite hervorsteht. Das Federelement stützt sich an diesem Bolzenkopf derart ab, dass es den vorbestimmten Federweg bereitstellt.

Eine Weiterbildung der Erfindung sieht vor, dass zwischen der Federanordnung und der Haltezunge auf deren dem Bremsbelag zugewandten Seite ein Füllelement, insbesondere ein Füllring, vorgesehen ist. Dieses Füllelement sorgt dafür, dass der Raum zwischen Federanordnung und Haltezunge, der sich im Laufe der Betriebsdauer mit Abrieb füllen könnte, hinreichend abgedichtet wird, so dass eine derartige die Funktionsweise möglicherweise beeinträchtigende Füllung mit Abrieb unterbunden werden kann.

Gemäß einer weiteren Ausgestaltung der Erfindung kann vorgesehen sein, dass die Federanordnung aus einem gefalzten Federblech hergestellt ist und die wenigstens eine Haltezunge käfigartig umgreift, wobei die Federanordnung wenigstens einen Befestigungsarm und wenigstens eine Querspange aufweist, mit denen die Federanordnung haltend an der Haltezunge angreift. Ferner kann vorgesehen sein, dass die Federanordnung eine Rastkralle zum Positionieren der Federanordnung an der Haltezunge aufweist. Die Rastkralle kann auch Federfunktion übernehmen. In diesem Zusammenhang ist es gemäß einer Weiterbildung der Erfindung ferner möglich, dass die Federanordnung wenigstens einen Klemmfortsatz aufweist, der zum Verklemmen der Federanordnung an der Haltezunge dient. Über den wenigstens einen Klemmfortsatz kann der Belagträger unter Haftreibung in dem Aufnahmebereich der Betätigungseinrichtung gehalten und geführt werden. Der wenigstens eine Klemmfortsatz kann relativ zum Rest der Federanordnung in einem geeigneten Winkel von bis zu 90° abgewinkelt sein. Die Federanordnung kann derart ausgebildet sein, dass sie den Bremsbelagträger nach einer elastischen Auslenkung in Folge einer Bremsbetätigung entweder in die vorbestimmte Ausgangsstellung zurückzieht oder zurückdrückt.

Die Erfindung betrifft ferner eine Bremsbelaganordnung für eine Scheibenbremse der vorstehend beschriebenen Art, wobei die Bremsbelaganordnung einen Bremsbelagträger aufweist, an dem ein Fahrzeugbremsbelag angebracht ist, wobei der Bremsbelagträger wenigstens eine Haltezunge aufweist, wobei die Haltezunge in dem wenigstens einen Aufnahmebereich in einer Betätigungsrichtung geführt aufnehmbar ist, wobei an der wenigstens einen Haltezunge eine Federanordnung angebracht ist, über die eine Rückstellkraft in Folge einer elastischen Deformation durch bremswirksame Auslenkung der Bremsbelaganordnung auf diese aufbringbar ist. Dabei kann vorgesehen sein, dass die Federanordnung Federstützabschnitte aufweist, mit denen sich die Federanordnung unter Vorspannung in dem Aufnahmebereich abstützt, und dass die Federanordnung einen vorbestimmten Federweg vorgibt, der derart bemessen ist, dass er eine Bewegung des Bremsbelagträgers für eine Bremsenbetätigung ohne Belagverschleiß-Kompensation zulässt und derart, dass bei Aufbrauchen des vorbestimmten Federwegs die Bremsbelaganordnung zur Belagverschleiß-Kompensation in Anlage mit der Federanordnung gelangt und diese innerhalb der Führung belagverschleiß-kompensierend verlagert.

Die Erfindung wird im Folgenden beispielhaft anhand der beiliegenden Figuren erläutert. Es stellen dar:
- Fig. 1: eine Schnittansicht durch eine Scheibenbremse mit einer Bremsscheibe und zwei seitlich von dieser angeordneten Bremsbelaganordnungen, die in einem Scheibenbremsengehäuse oder einem Bremsträger geführt sind;
- Fig. 2: eine Detaildarstellung einer Haltezunge eines Bremsbelagträgers in Vorderansicht;
- Fig. 3: eine Ansicht entsprechend Fig. 2, jedoch von der anderen Seite des Bremsbelagträgers;
- Fig. 4: eine Detailansicht aus Fig. 1 in Ruhestellung;
- Fig. 5: eine Detailansicht entsprechend Fig. 4 in Betätigungsstellung ohne Verschleißkompensation;
- Fig. 6: eine Kombination aus Bremsbelagträger und Federanordnung der ersten Ausführungsform der Erfindung vor der Montage;
- Fig. 7: die Anordnung gemäß Fig. 6 während der Montage in dem Scheibenbremsengehäuse oder Bremsträger;
- Fig. 8: eine Darstellung entsprechend Figur fünf zur Erläuterung der Verschleißkompensation;
- Fig. 9: eine zweite Ausführungsform der Erfindung in Schnittdarstellung;
- Fig. 10a: eine Federanordnung einer dritten Ausführungsform der Erfindung;
- Fig. 10b: eine gegenüber Fig. 10a abgewandelte Ausführungsform der Erfindung;
- Fig. 11: die dritte Ausführungsform der Erfindung in Schnittdarstellung;
- Fig. 12: eine Federanordnung einer vierten Ausführungsform der Erfindung;
- Fig. 13: die vierte Ausführungsform der Erfindung in Schnittdarstellung;
- Fig. 14: eine Federanordnung einer fünften Ausführungsform der Erfindung;
- Fig. 15: die fünfte Ausführungsform der Erfindung in Schnittdarstellung;
- Fig. 16: eine Federanordnung einer sechsten Ausführungsform der Erfindung;
- Fig. 17: die sechste Ausführungsform der Erfindung in Schnittdarstellung;
- Fig. 18: eine Federanordnung einer siebten Ausführungsform der Erfindung;
- Fig. 19: die siebte Ausführungsform der Erfindung in Schnittdarstellung;
- Fig. 20: eine Federanordnung einer achten Ausführungsform der Erfindung;
- Fig. 21: die achte Ausführungsform der Erfindung in Schnittdarstellung;
- Fig. 22: eine Federanordnung einer neunten Ausführungsform der Erfindung;
- Fig. 23: die neunte Ausführungsform der Erfindung in Schnittdarstellung.
- Fig. 24: eine teilweise geschnittene Seitenansicht einer weiteren Ausführungsform der Erfindung;
- Fig. 25: die Ausführungsform gemäß Fig. 24 in Richtung der dem Bremsbelag abgewandten Seite betrachtet;
- Fig. 26: eine Ansicht der Ausführungsform gemäß Fig. 24 und 25 in Richtung der dem Bremsbelag zugewandten Seite der Haltezunge betrachtet, wobei die Haltezunge im Aufnahmebereich des Scheibenbremsengehäuses aufgenommen ist;
- Fig. 27: eine hierzu abgewandelte weitere Ausführungsform der Erfindung in perspektivischer Ansicht;
- Fig. 28: eine Ansicht der Ausführungsform gemäß Fig. 27 aus anderem Blickwinkel;
- Fig. 29: eine Detailansicht zu der Ausführungsform gemäß Fig. 27 und 28 in Seitenansicht;
- Fig. 30: eine weitere Ausführungsform der Erfindung in perspektivischer Teilansicht;
- Fig. 31: eine Draufsicht auf die Federklammer aus Fig. 30;
- Fig. 32: eine Seitenansicht zur Ausführungsform der Fig. 30 und 31;
- Fig. 33: eine perspektivische Ansicht einer Einbausituation einer Scheibenbremse einer weiteren Ausführungsform der Erfindung;
- Fig. 34: den in Fig. 33 mit A bezeichneten Bildausschnitt in vergrößerter Darstellung;
- Fig. 35: die Federanordnung gemäß Fig. 34 in freigeschnittener Darstellung;
- Fig. 36: eine Schnittansicht durch Fig. 34 entlang der Schnittebene XZ ist;
- Fig. 37: eine Schnittansicht entlang der Schnittebene XY;
- Fig. 38: eine perspektivische Einzelteildarstellung einer Federanordnung einer weiteren Ausführungsform gemäß der vorliegenden Erfindung;
- Fig. 39: eine Vorderansicht dieser Federanordnung;
- Fig. 40: eine Längsschnittansicht entsprechend der Schnittebene XY;
- Fig. 41: eine Ansicht entsprechend Fig. 33 dieser Ausführungsform;
- Fig. 42: eine vergrößerte Ansicht des in Fig. 41 strichliert umkreisten Darstellungsbereichs B.

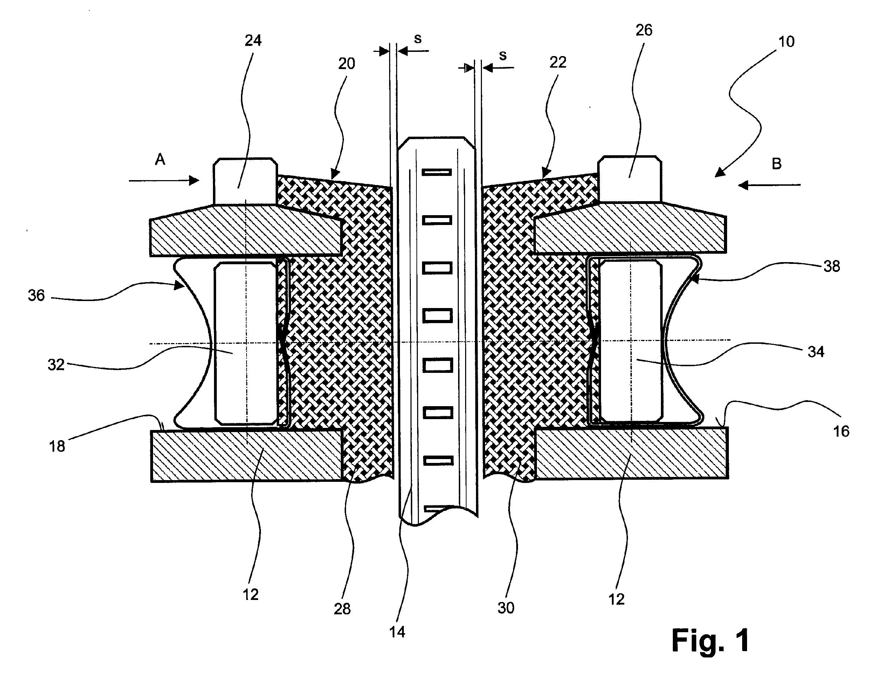

In Fig. 1 ist eine Schnittdarstellung durch eine Scheibenbremse 10 gemäß der vorliegenden Erfindung gezeigt. Die Scheibenbremse 10 umfasst einen schraffiert gezeichneten Bremsträger einer Schwimmsattelbremse 12, der eine Bremsscheibe 14 überspannt. Die Bremsscheibe 14 ist drehfest mit einem abzubremsenden Rad in herkömmlicher Weise verbunden.

Der Bremsträger 12 weist zwei einander sich gegenüberliegende Führungen mit führenden Aufnahmebereichen 16 und 18 auf. In jedem dieser Aufnahmebereiche 16 bzw. 18 ist jeweils eine Bremsbelaganordnung 20 bzw. 22 verlagerbar geführt. Die Bremsbelaganordnungen 20 bzw. 22 lassen sich durch Aufbringen von Kräften (was nicht näher gezeigt ist) in Richtung der Pfeile A und B auf die Bremsscheibe 14 zu verlagern, um eine Bremswirkung zu erzielen. Dabei muss ein Luftspiel s durchlaufen werden, das sicherstellt, dass in der gezeigten Ruhestellung die Bremsbeläge keine Rechtsschleifmomente und damit keine Bremskraft auf die Bremsscheibe ausüben. Zur Erzielung einer Bremswirkung müssen die Bremsbelaganordnungen 20 und 22 mehr oder weniger fest an die Bremsscheibe 14 angedrückt werden.

Die Bremsbelaganordnungen 20 und 22 weisen jeweils einen Bremsbelagträger 24 und 26 auf, wobei an jedem Bremsbelagträger 24 bzw. 26 jeweils ein Bremsbelag 28 bzw. 30 angebracht ist. Jeder Bremsbelagträger 24 bzw. 26 weist beidseits jeweils eine Haltezunge 32 bzw. 34 auf. Die Haltezungen 32 bzw. 34 sind zur Führung verschiebbar in dem Aufnahmebereich 16 bzw. 18 aufgenommen. An jeder Haltezunge 32 bzw. 34 ist jeweils eine Sigma (Σ)-förmige Federanordnung 36 bzw. 38 angebracht. Im Folgenden soll lediglich die Federanordnung 36 beschrieben werden, wobei die Federanordnung 38 in gleicher Weise ausgebildet ist.

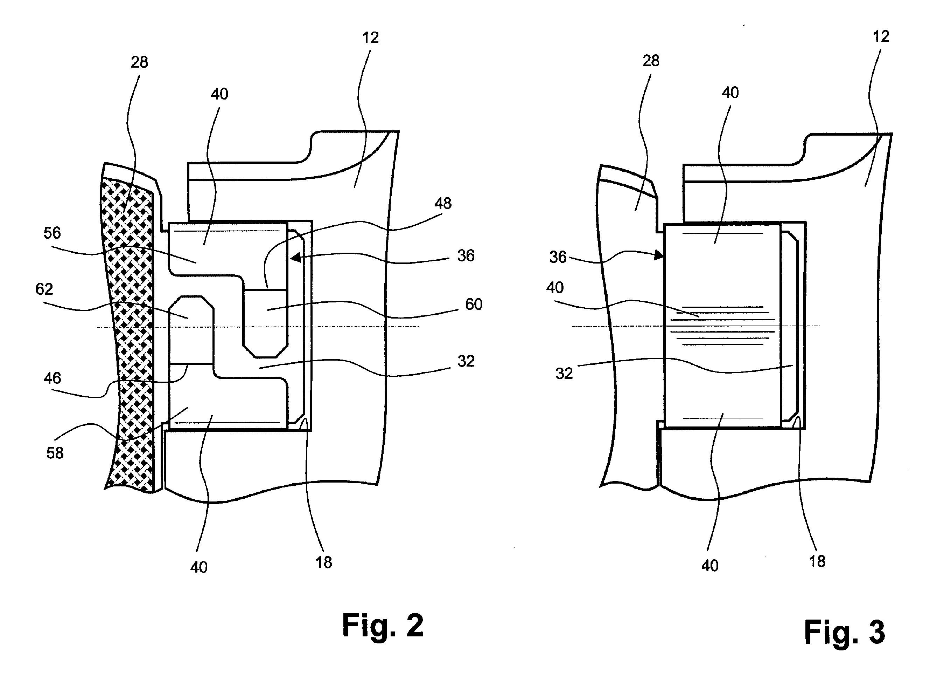

In Fig. 2 erkennt man in einer Teilansicht auf dem Bremsbelag 28, dass das Federelement 36 an der Haltezunge 32 angebracht ist, wobei dieses einen bandartigen Körper 40 aufweist, mit dem es die Haltezunge 32 umgreift. Fig. 3 zeigt die Ansicht von der entgegengesetzten Seite, wobei man erkennt, dass der bandartige Abschnitt 40 auf dieser Seite vollständig um die Haltezunge 32 herumläuft. Die Federanordnung 36 läuft dann in zwei laschenförmigen Abschnitten 60 und 62 aus, die sich in der gezeigten Ausführungsform seitlich überlappen. Diese beiden Federlaschen 60 und 62 sind an einer Stelle 46 bzw. 48 zur Haltezunge 32 hin abgeknickt und liegen mit ihren freien Enden federnd an der Haltezunge 32 an. Man erkennt ferner, dass die Haltezunge 32 in dem Aufnahmebereich 18 des Bremsträgers 12 aufgenommen ist.

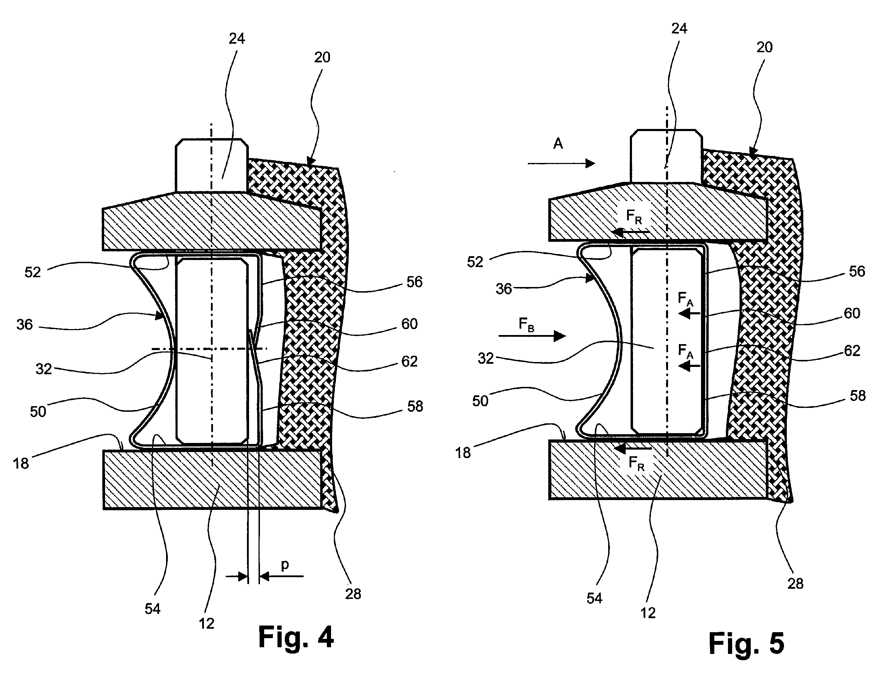

Fig. 4 und 5 zeigen die übliche Funktionsweise. In Fig. 4 ist der Ausgangszustand gezeigt, d.h. der Zustand vor einer Bremsenbetätigung. Im Einzelnen erkennt man, dass die Federanordnung 36 einen konvex gekrümmten Rücken 50 aufweist. Dieser liegt mit seinem Scheitelpunkt etwa mittig an der vom Bremsbelag 28 abgewandten Seite der Haltezunge 32 an. Beidseits des Rückens 50 erstrecken sich in Fig. 4 im Wesentlichen parallel zueinander Federstützabschnitte 52 und 54, die federvorgespannt an den einander zugewandten Innenflächen des Aufnahmebereich 18 liegen. Die Federvorspannung ist derart bemessen, dass die Bremsbelaganordnung 20 über den Bremsbelagträger 24, d.h. insbesondere über dessen Haltezunge 32, unter Vermittlung der Federanordnung 36 in dem Aufnahmebereich 18 gehalten wird. Dabei liegen die Federstützabschnitte 52 und 54 unter Federvorspannung an den zugewandten Innenflächen des Aufnahmebereichs 18 an und sorgen so für Reibungshaltekräfte.

Ausgehend von den Federstützabschnitten 52 und 54 verlaufen Anlageabschnitte 56 und 58, die über die in Fig. 2 gezeigten Knickstellen in abgeknickte Federlaschen 60 und 62 übergehen. Die Federlaschen 60 und 62 liegen mit ihren freien Enden unter Federvorspannung an der dem Bremsbelag 20 zugewandten Seite der Haltezunge 32 an. Zwischen den Anlageabschnitten 56 bzw. 58 und der dem Bremsbelag 28 zugewandten Seite der Federzunge 32 ist ein Spiel p ausgebildet, welches größer bemessen ist, als das Lüftspiel s gemäß Fig. 1.

Wird nun in Folge einer Bremspedalbetätigung die Bremsbelaganordnung 20 durch Beaufschlagung des Bremsbelagträgers 24 mit einer Betätigungskraft F_{B} in Betätigungsrichtung A verlagert, so werden die Federlaschen 60 und 62 in entsprechender Richtung elastisch deformiert. Die Verlagerung der Bremsbelaganordnung 20 erfolgt zunächst so weit, bis das Bewegungsspiel p aufgebraucht ist. Liegt kein wesentlicher Verschleiß am Bremsbelag 28 vor, so reicht dieses Bewegungsspiel p ohne weiteres aus, um jede Bremsbetätigung durchzuführen, d.h. um das Lüftspiel s zu überwinden und um ferner den Bremsbelag 28 entsprechend dem Fahrerwunsch hinreichend stark an die Bremsscheibe 14 anzudrücken. Dabei sind die Deformationskräfte zum elastischen Zurückbiegen der Laschen 60 und 62 kleiner, als die Reibungskräfte F_{R}, die durch die Federvorspannung der Federstützabschnitte 52 und 54 im Aufnahmebereich 18 auftreten. Dies bedeutet, dass im Zuge einer normalen Bremsenbetätigung, d.h. einer Bremsenbetätigung ohne Verschleißkompensation die Federanordnung 36 im Aufnahmebereich 18 in ihrer Position verharrt und lediglich nach Maßgabe der Betätigungskraft F_{B} die Bremsbelaganordnung 20 entsprechend Pfeil A verlagert wird.

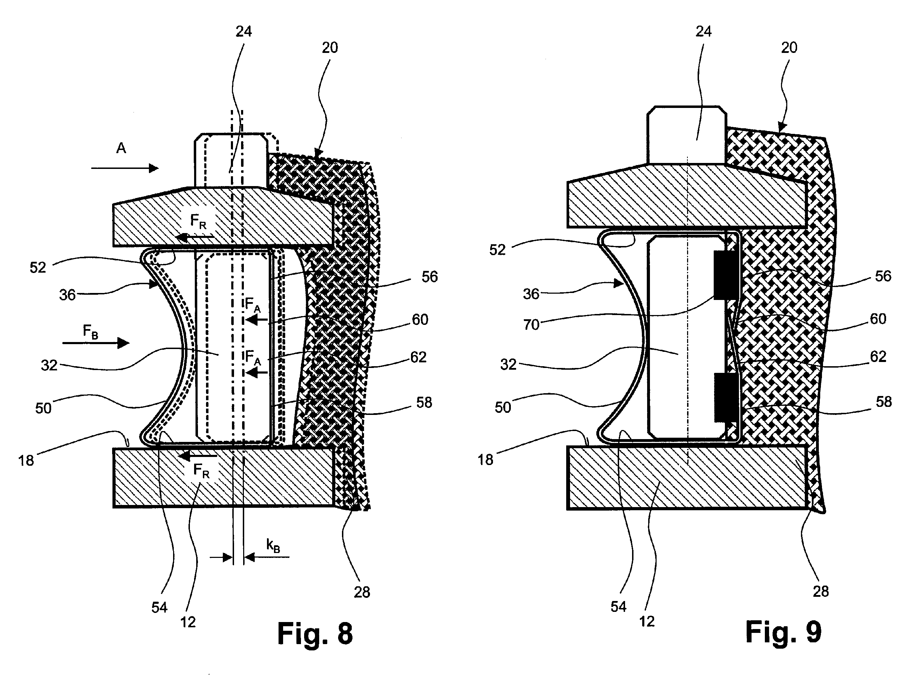

Kommt es nun aber zu einem Verschleiß am Bremsbelag 28 aufgrund mehrfacher intensiver Betätigung der Bremsen, so wird aufgrund der Rückstellbewegung das Lüftspiel s zu groß. Um diesen Verschleiß zu kompensieren und um ein konstantes Lüftspiel s zu gewährleisten, ist es erforderlich, die Bremsbelaganordnung 20 zusammen mit der Federanordnung 36 im Aufnahmebereich 18 entsprechend Pfeil A zur Bremsscheibe hin zu verlagern, um das in Fig. 1 gezeigte Lüftspiel wiederherzustellen. Eine entsprechende Verlagerung ist in Fig. 8 in Strichlinien gezeigt. Der Bremsträger 12 bleibt dabei ortsfest. Eine solche Verlagerung tritt dann auf, wenn die Betätigungskraft F_{B} größer ist als die Summe der Reibungskräfte F_{R} und das Bewegungsspiel p (siehe Fig. 4) bei einer Bremsenbetätigung gänzlich aufgebraucht wurde. Bei einer solchen Situation kommt es zunächst, wie mit Bezug auf Fig. 5 beschrieben, zu einem Zustand, in dem die beiden Federlaschen 60 und 62 so weit deformiert werden, bis die dem Bremsbelag 28 zugewandte Seite der Haltezunge 32 an den Anlageabschnitten 56 und 58 der Federanordnung 36 formschlüssig anliegt. Sodann wird aufgrund der größeren Betätigungskraft F_{B} durch die definierte Anlage von Haltezunge 32 und Federanordnung 36 die gesamte Federanordnung zusammen mit der Bremsbelaganordnung 20 in Fig. 8 nach rechts entlang der Betätigungsrichtung A verschoben und die Bremsung entsprechend durchgeführt.

Gibt der Fahrer das Bremspedal wieder frei, so dass die Betätigungskraft F_{B} aufgehoben wird, so bewegt sich entsprechend der beschriebenen Funktionsweise die Bremsbelaganordnung 20 in Folge der Rückstellkräfte der Federlaschen 60 und 62 zurück, bis schließlich das Bewegungsspiel p und das Lüftspiel s wieder hergestellt ist. Die Bremse befindet sich sozusagen wieder im Soll-Ausgangszustand, wenn man von dem kompensierten Belagverschleiß absieht, der durch das Vorrücken der Bremsbelaganordnung 20 zusammen mit der Federanordnung 36 erreicht wurde. Der kompensierte Belagverschleiß ist in Fig. 8 mit der Strecke k_{B} bezeichnet. Diese entspricht genau der Strecke, um die die Federanordnung zusammen mit der Bremsbelaganordnung 20 dauerhaft nach rechts verschoben wurde.

Die Erfindung hat den Vorteil, dass klar zwischen einer normalen Bremsenbetätigung und einer Belagverschleiß-Kompensation unterschieden wird. Erst wenn das klar definierte Bewegungsspiel p ganz aufgebraucht ist, und sich in Folge der Betätigungskraft F_{B} der Bremsbelag 28 immer noch auf die Bremsscheibe zustellen lässt, kommt es automatisch zu einer definierten Verschleißkompensation. Diese Funktionsweise kann mit der vorliegenden Erfindung zuverlässig erreicht werden. Die hierzu erforderlichen konstruktiven Mittel sind einfach und kostengünstig.

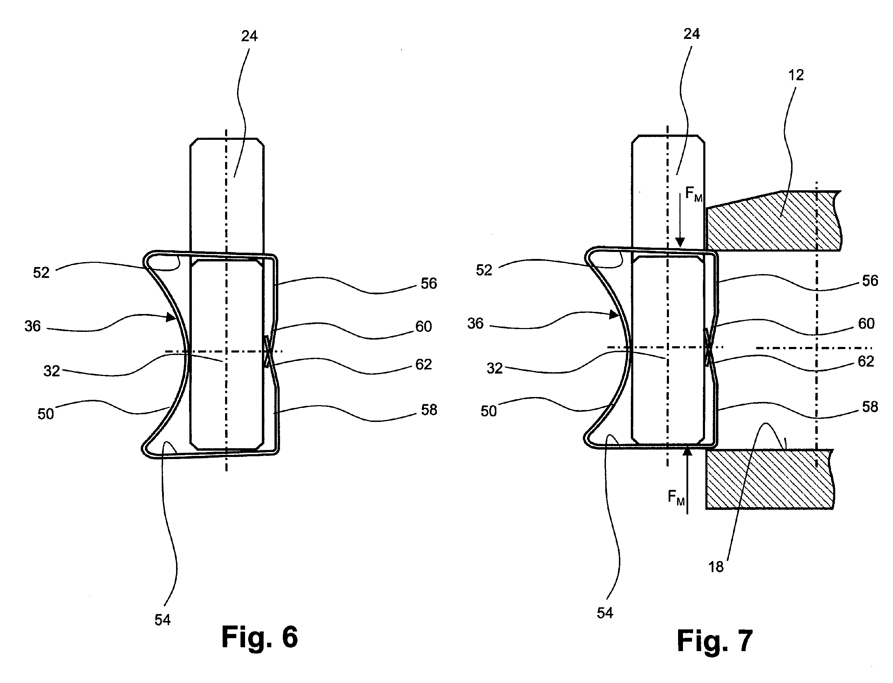

Fig. 6 und 7 zeigen die Montage der erfindungsgemäßen Federanordnung mit einem entsprechenden Bremsbelagträger (der Bremsbelag wurde zur Vereinfachung der zeichnerischen Darstellung weggelassen) in den Bremsträger 12 der Scheibenbremse. Man erkennt, dass die Seiten der Stützabschnitte 52 und 54 ausgehend von dem Rücken 50 nach innen aufeinander zu geneigt sind und in Fig. 6 nach rechts verlaufen, d.h. in einem spitzen Winkel zueinander. Mit anderen Worten sind diese Federstützabschnitte 52 und 54 unter Federvorspannung ausgehend vom Rücken 50 konisch zulaufend. Sie bilden damit eine Art Einführschräge zur vereinfachten Montage, wobei im Bereich des Rückens 50, im nicht montierten Zustand, die Stützabschnitte 52 und 54 einen größeren Abstand zueinander aufweisen als die Weite des Aufnahmebereichs 18 am Bremsträger 12, während der, durch die Abwinklung der Stützabschnitte 52 und 54 dem Rücken abgewandte Bereich der Stützabschnitte 52 und 54 einen geringfügig kleineren Abstand aufweist. Bei der Montage wirken die Montagekräfte F_{M} auf die beiden Stützabschnitte 52 und 54 ein, um ein Einschieben zu ermöglichen. Dabei werden die Stützabschnitte 52 und 54 nach und nach weiter im Bereich des Rückens 50 zusammengedrückt, wobei der Rücken 50 entsprechend der Höhe der Überdeckung elastisch nachgibt. Dabei entsteht im Bereich der Anbindung der Stützabschnitte 52 und 54 an den Rücken 50 eine maximale Vorspannung, welche maßgebend für die Festlegung der Federanordnung 36 im Aufnahmebereich 18 ist. Diese Federvorspannung sorgt für die auftretenden Reibungskräfte, mit der die Federanordnung 36 im Aufnahmebereich 18 gehalten wird.

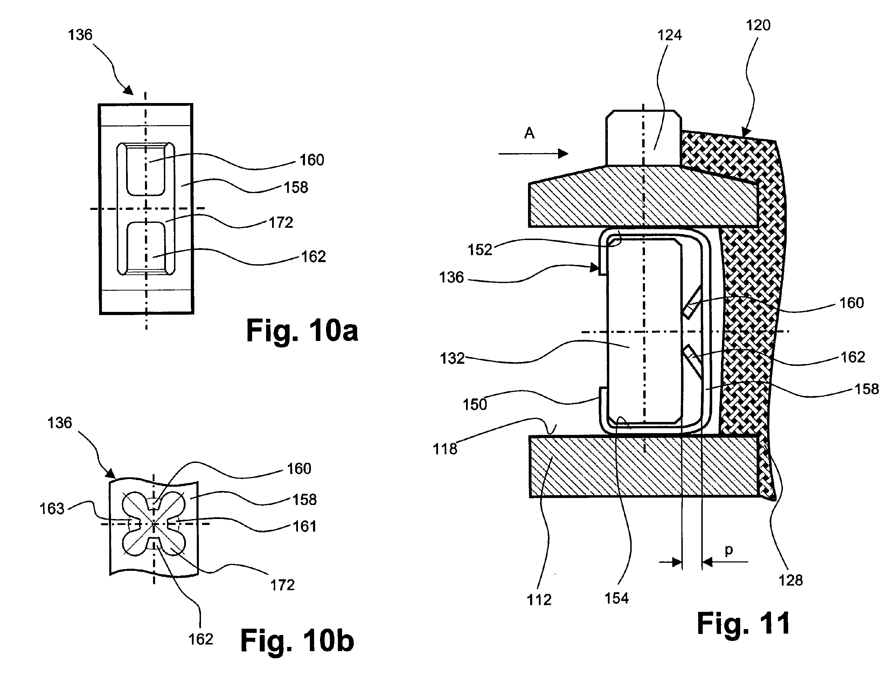

Fig. 9 zeigt eine Abwandlung der Ausführungsform gemäß Fig. 1 bis 8. Der einzige Unterschied zu vorstehend beschriebenen Ausführungsform besteht darin, dass in dem Bereich zwischen der Haltezunge 32 und den Anlageabschnitten 56 und 58 der Federanordnung 36 ein Füllring 70 angeordnet ist, der ein unerwünschtes Eindringen von Abrieb in diesen Bereich verhindert und so einer verschmutzungsbedingten Fehlfunktion, beispielsweise einem reduzierten Bewegungsspiel p vorbeugt. Fig. 10a und 11 zeigen eine weitere Ausführungsform der Erfindung, wobei für gleichwirkende oder gleichartige Komponenten dieselben Bezugszeichen wie vorangehend verwendet werden, jedoch mit der Ziffer "1" vorangestellt.

Die Federanordnung 136 gemäß Fig. 11 unterscheidet sich von der Federanordnung 36 der vorangehenden Ausführungsbeispiele dadurch, dass sie ein C-förmiges Band aufweist, aus der die beiden Federlaschen 160 und 162 in dem Anschlagabschnitt 158 herausgebogen sind. Der Federrücken 150 ist unterbrochen ausgebildet. Die beiden Federstützabschnitte 152 und 154 sind wiederum nach auswärts gespreizt und liegen unter Federvorspannung am Aufnahmebereich 118 an. Fig. 10 zeigt in einer Ansicht von links die Federanordnung 136. Diese weist in ihrem zentralen Bereich eine H-förmige Ausstanzung 172 auf, die zur Ausbildung der beiden Federlaschen 160 und 162 dient. Die Funktionsweise dieser Ausführungsform ist dieselbe wie vorangehend beschrieben. Im Rahmen der normalen Bremsenbetätigung wird zunächst das Bewegungsspiel p aufgebraucht. Erst dann, wenn es zu einer definierten formschlüssigen Anlage zwischen der Haltezunge 132 und dem Anlageabschnitt 158 kommt, wird eine Verschleißkompensation möglich.

Fig. 10b zeigt eine zu Fig. 10a leicht abgewandelte Ausführungsform. Im Federrücken 150 ist eine Ausstanzung in Form eines vierblättrigen Kleeblatts vorgesehen, so dass sich zum Zentrum hin radial einwärts stehende Federlaschen 160, 161, 162, 163 ergeben, die ähnlich wie die Federlaschen gemäß Fig. 10a aus der Ebene des Federrückens 150 vorstehen und den das Spiel p vorgebenden Federweg bestimmen. Bei dieser Ausführungsform der Erfindung werden die auf die Federanordnung wirkenden Kräfte gleichmäßiger verteilt.

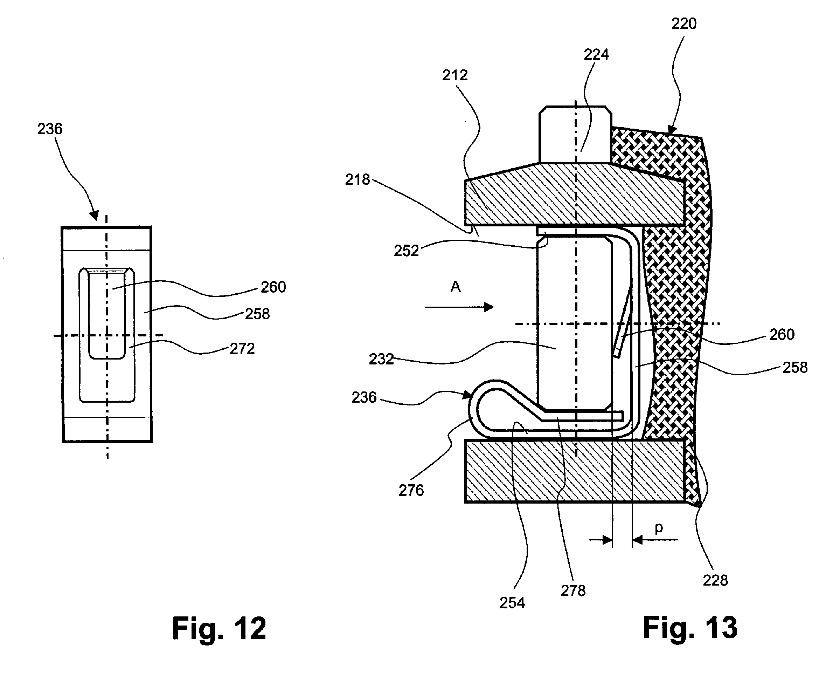

Fig. 12 und 13 zeigen eine weitere Ausführungsform der Erfindung. Wiederum werden für gleichwirkende oder gleichartige Komponenten dieselben Bezugszeichen verwendet, jedoch mit der Ziffer "2" vorangestellt.

In Fig. 13 erkennt man, dass das Federelement 236 aus seinem Federstützabschnitt 254 in einen schleifenförmigen Federbogen 276 übergeht. Dieser schleifenförmige Federbogen 276 erstreckt sich bis hin zu einem freien, in Richtung nach oben federnd vorgespannten linearen Abschnitt 278. Diese Form bewirkt, dass die Federanordnung 236 die Haltezungezone 232 sicher zwischen dem Abstützabschnitt 252 und dem Abstützabschnitt 254 einklemmt. Dadurch kann ein Spiel in Querrichtung zur Betätigungsrichtung A unterdrückt werden.

Fig. 12 zeigt wiederum eine Ansicht entsprechend Fig. 10. Man erkennt, dass lediglich eine Federlasche 262 vorgesehen ist, die von einer U-förmigen Ausstanzung 272 umgeben ist und dadurch ausgebildet wurde.

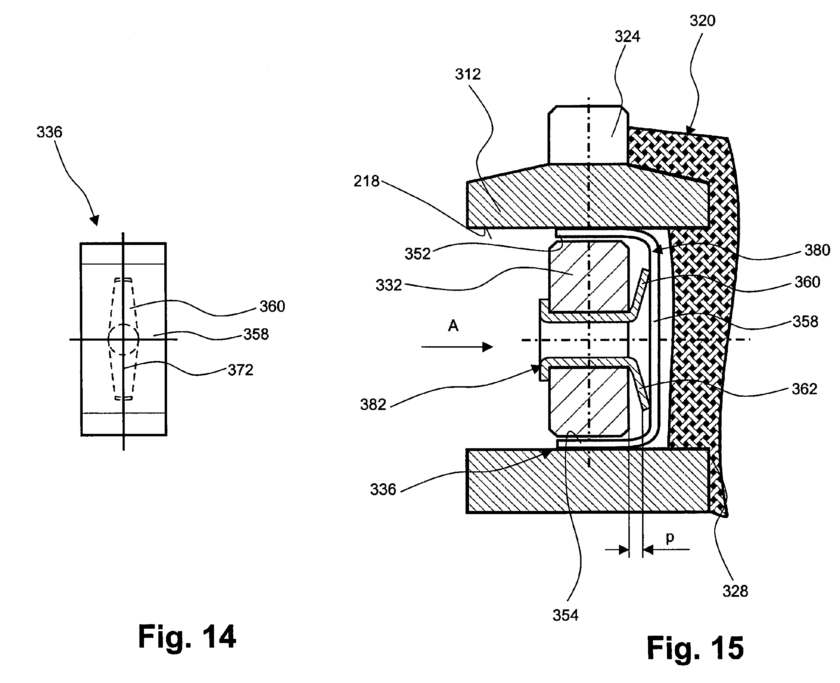

Fig. 14 und 15 zeigen eine weitere Ausführungsform der Erfindung. Wiederum werden für gleichwirkende oder gleichartige Komponenten dieselben Bezugszeichen verwendet, jedoch mit der Ziffer "3" vorangestellt.

Die Ausführungsform gemäß Fig. 14 und 15 unterscheidet sich von den vorangehenden Ausführungsformen in der Ausgestaltung der Federanordnung 336. Die Federanordnung 336 umfasst zwei Bauteile, nämlich einen C-förmigen Federbügel 380, der die beiden Federstützabschnitte 352 und 354 aufweist. Ferner umfasst die Federanordnung 336 ein Federelement 382, das die Haltezunge 332 in einem Durchbruch durchsetzt, und auf der dem Bremsbelag 328 zugewandten Seite aufgespreizt ist. In diesem Bereich weist es zwei Federlaschen 360 und 362 auf, die den Federbügel 380 in die in Fig. 15 gezeigte Stellung vorspannen. In Folge einer Betätigung kann der Bewegungsspielraum p aufgebraucht werden, bis es schließlich zu einer Verschleißkompensation kommt, wie vorstehend beschrieben. Bei der Dimensionierung des Bewegungsspiels p ist die Materialstärke der Federlaschen 360 und 362 zu berücksichtigen.

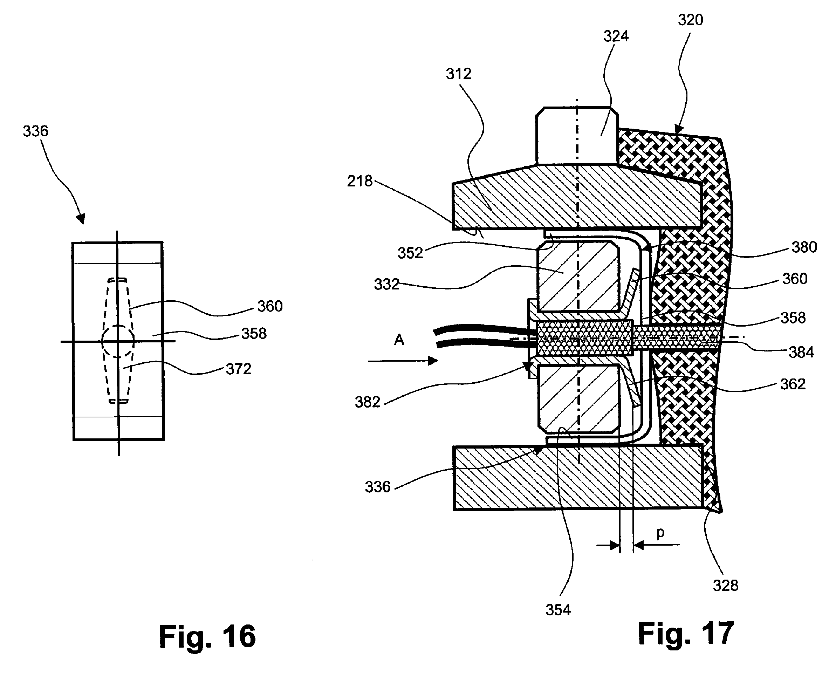

Fig. 16 und 17 zeigen eine weitere Ausführungsform der Erfindung. Wiederum werden für gleichwirkende oder gleichartige Komponenten dieselben Bezugszeichen verwendet, jedoch mit der Ziffer "3" vorangestellt.

Die Ausführungsform gemäß Fig. 16 und 17 unterscheidet sich von der Ausführungsform gemäß Fig. 14 und 15 lediglich darin, dass in die Federanordnung 336 ein Belagverschleißsensor 384 eingesetzt ist, der zur Erfassung des Belagverschleißes über die in Fig. 17 aus dem Belagverschleißsensor 384 auslaufenden Anschlusskabel an eine elektronische Steuereinheit des Kraftfahrzeugs ausgeben kann.

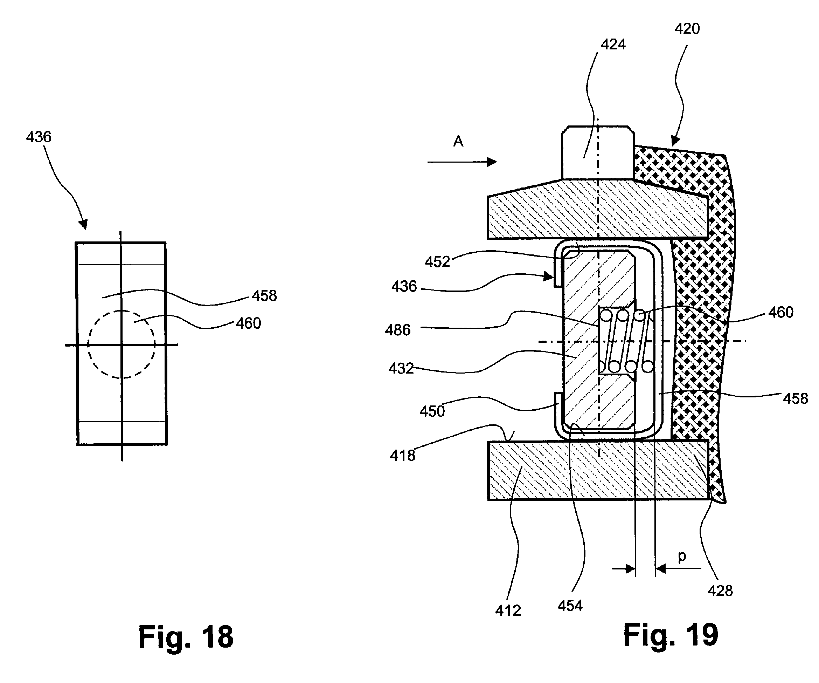

Fig. 18 und 19 zeigen eine weitere Ausführungsform der Erfindung. Wiederum werden für gleichwirkende oder gleichartige Komponenten dieselben Bezugszeichen verwendet, jedoch mit der Ziffer "4" vorangestellt.

Die Ausführungsform gemäß Fig. 18 und 19 ist ähnlich der Ausführungsform gemäß Fig. 11, wobei die dortigen Federlaschen 160 und 162 durch ein gesondertes Federelement 460 ersetzt sind. Dieses ist in einer Ausnehmung 486 in der Haltezunge 432 aufgenommen. Das Federelement 460 ist als Spiraldruckfeder ausgeführt. Dieses Federelement 460 ist so ausgelegt, dass es erst dann auf Block geht, wenn das Bewegungsspiel p aufgebraucht ist. Dadurch ist eine definierte formschlüssige Anlage zwischen der Haltezunge 432 und die Federanordnung 436 gewährleistet.

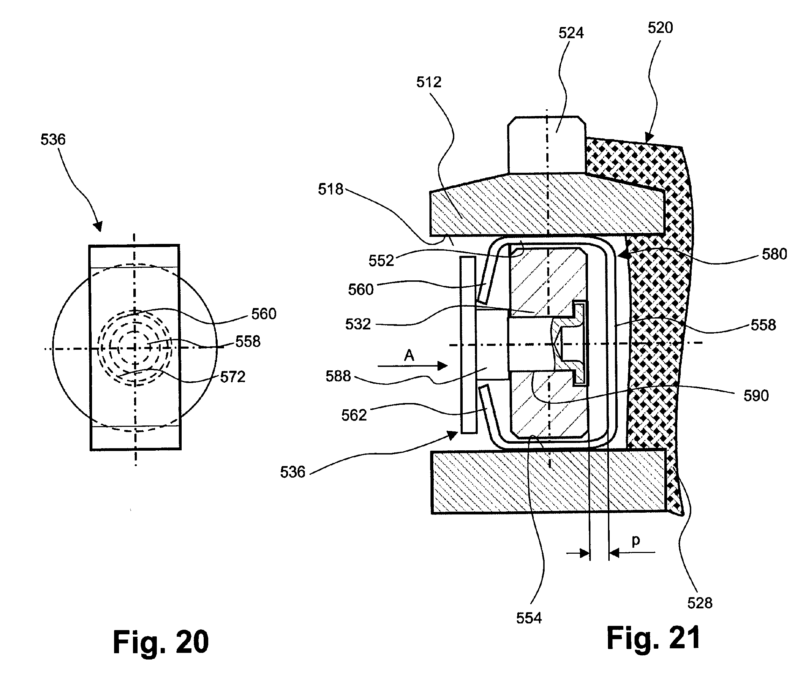

Fig. 20 und 21 zeigen eine weitere Ausführungsform der Erfindung. Wiederum werden für gleichwirkende oder gleichartige Komponenten dieselben Bezugszeichen verwendet, jedoch mit der Ziffer "5" vorangestellt.

Die Ausführungsform gemäß Fig. 20 und 21 sieht vor, dass ein bolzenartiges Abstützelement 588 vorgesehen ist, das sich durch eine in der Haltezunge 532 ausgebildete Ausnehmung 590 hindurch erstreckt. An diesem Abstützelement 588, insbesondere an dessen flanschartigen Kopf, stützt sich ein C-förmiges Federelement 580 mit seinen aufgespreizten Schenkeln 552 und 554 und die daran angeformten Federlaschen 560 und 562 federnd ab. Beim Aufbrauchen des Bewegungsspiels p werden die Federlaschen 560 und 562 durch Vorrücken der Einheit aus Haltezunge 532 und Abstützelement 588 elastisch deformiert.

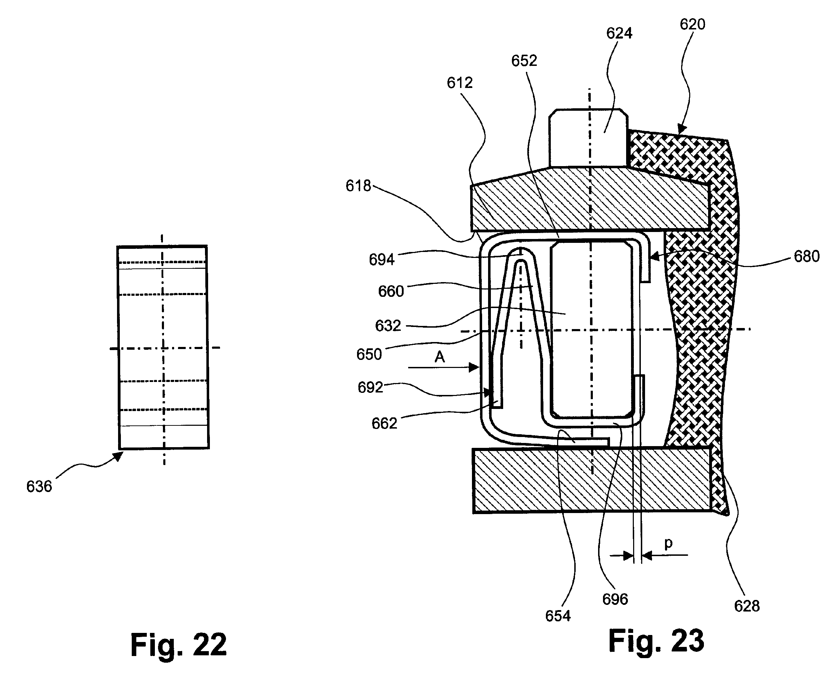

Fig. 22 und 23 zeigen eine weitere Ausführungsform der Erfindung. Wiederum werden für gleichwirkende oder gleichartige Komponenten dieselben Bezugszeichen verwendet, jedoch mit der Ziffer "6" vorangestellt.

Auch bei der Ausführungsform gemäß Fig. 22 und 23 ist die Federanordnung 636 mehrteilig ausgebildet. Zwischen der Haltezunge 632 und dem C-förmigen Federelement 680 ist ein V-förmig gefalztes Federelement 692 vorgesehen. Dieses umfasst einen ersten Federabschnitt 660 und einen zweiten Federabschnitt 662, die in einem harmonisch verlaufenden Falzbereich 694 V-förmig zueinander gefalzt sind. Der Federabschnitt 662 ist durch Vernieten oder Verschweißen oder eine andere geeignete Befestigungsart mit dem Rücken 650 des Federelements 680 verbunden. Das Federelement 692 weist an den Federabschnitt 660 anschließend eine Aufnahmetasche 696 auf, welche die Haltezunge 632 formschlüssig umgreift. Im Rahmen einer normalen Bremsenbetätigung wird die Haltezunge 632 zusammen mit der gesamten Bremsbelaganordnung 620 entlang der Bewegungsrichtung A bewegt, wobei das Bewegungsspiel p verkleinert wird. Dabei spreizt sich das Federelement 692 elastisch auf. Die Haltezunge 632 wird spielfrei gehalten, so dass unerwünschte Geräusche unterdrückt werden können.

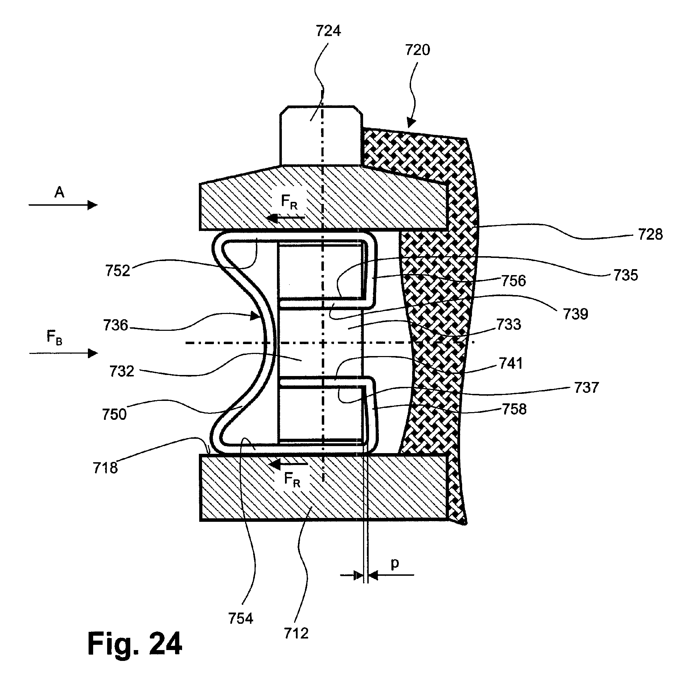

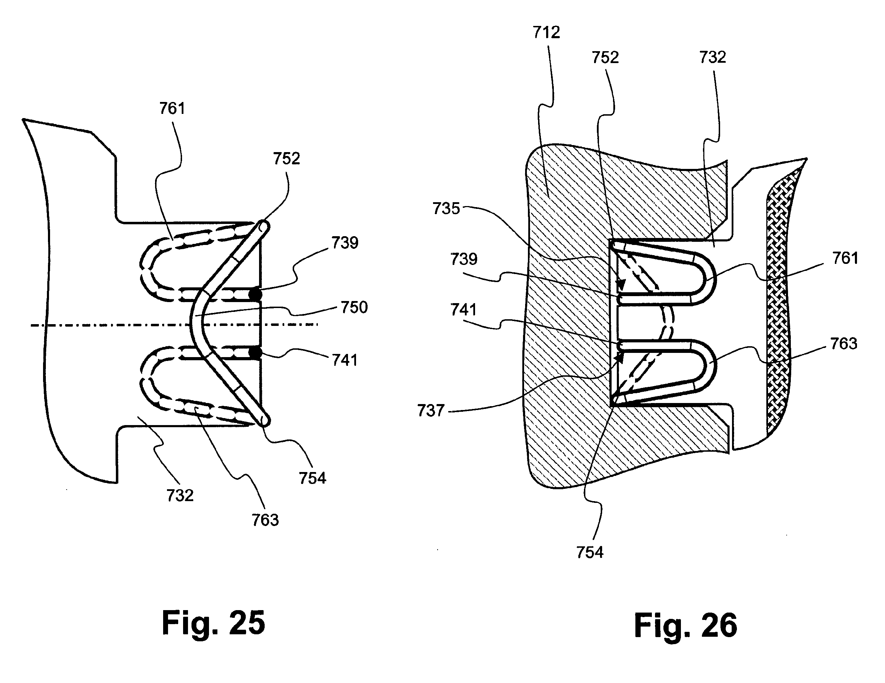

Fig. 24 zeigt eine weitere Ausführungsform der Erfindung, bei der das Federelement als Federklammer aus einem mehrfach gebogenen Federdraht ausgebildet ist. Die Haltezunge 736 weist, wie auch in Fig. 25 und Fig. 26 erkennbar, an ihrer Stirnseite 733 Ausnehmungen auf. In diesen Ausnehmungen 735, 737 sind Haltearme 739, 741 formschlüssig aufgenommen, so dass das Federelement 736 fest an der Haltezunge 732 angebracht ist. Von den Haltearmen 739, 741 erstrecken sich Federschleifen 761 und 763 abgewinkelt, deren Abstand von der Federzunge 732 mit zunehmender Entfernung von den Haltearmen 739 und 741 schließlich auf den Abstand p anwächst. Im äußeren Bereich gehen die beiden Federschleifen 761 und 763 in die Federstützabschnitte 752 und 754 über, mit denen das Federelement 736 an den einander zugewandten Flächen des Aufnahmebereichs 718 mit der Reibkraft F_{R} anliegt. Der Federrücken 750 ist wiederum bügelförmig ausgebildet und erstreckt sich geschwungen, wie in Fig. 25 gezeigt, auf der vom Bremsbelag 728 abgewandten Seite der Haltezunge 732.

In Fig. 25 und 26 erkennt man jeweils den schleifenförmigen Verlauf von Federrücken 750 und Federschleifen 761 und 763. Die Haltearme 739 und 741 enden in Fig. 24 links im Wesentlich bündig mit der Haltezunge 732.

Die Funktionsweise ist ähnlich wie vorstehend beschrieben. Eine normale Bremsenbetätigung zur Verlagerung des Bremsbelags erfolgt im Rahmen des Spiels p, wobei sich dabei die Federschleifen 761, 763 über ihren Verlauf elastisch unter Aufbrauch des Spiels p verformen. Erst im Verschleißzustand, wenn das Spiel p verschleißbedingt nicht mehr zur Bremsbetätigung ausreicht, wird die Betätigungskraft so groß, dass sie die Reibungskräfte F_{R} überwindet, so dass es unter Aufhebung der Haftreibung an den Federstützabschnitten 752 und 754 zu einer verschleißkompensierenden Verlagerung der gesamten Anordnung innerhalb des Aufnahmebereichs 718 kommt.

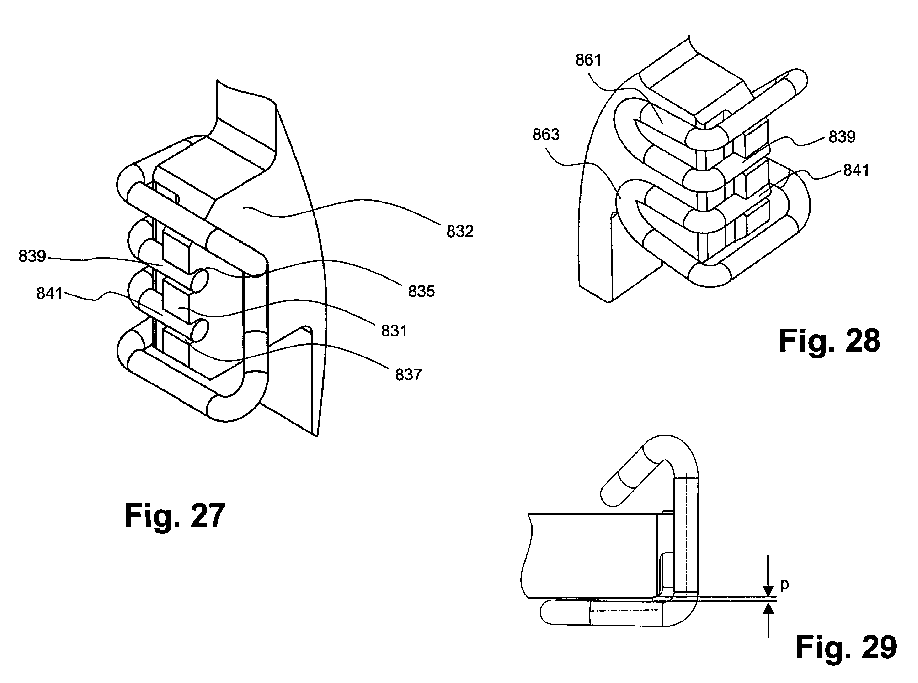

Fig. 27 bis 29 zeigen eine gegenüber der Ausführungsform nach Fig. 24 bis 26 leicht abgewandelte Ausführungsform. Dabei sind die Ausnehmungen 835 und 837 in einem Vorsprung 831 der Haltezunge 832 ausgebildet. Ansonsten ist die Funktionsweise und Gestaltung im Wesentlichen identisch zu der Ausführungsform gemäß Fig. 24 bis 26, d.h. die Federschleifen 861 und 863 erstrecken sich derart ausgehend von ihren Haltearmen 839 und 841, dass dadurch das Spiel p über den Verlauf der Federschleifen 861 und 863 bereitgestellt wird. Man erkennt dies wieder in der Fig. 29, die erkennen lässt, dass das Spiel p durch schrägen Verlauf der Federschleife 861 bezüglich der dieser gegenüberliegenden Seite der Haltezunge 832 bereitgestellt wird.

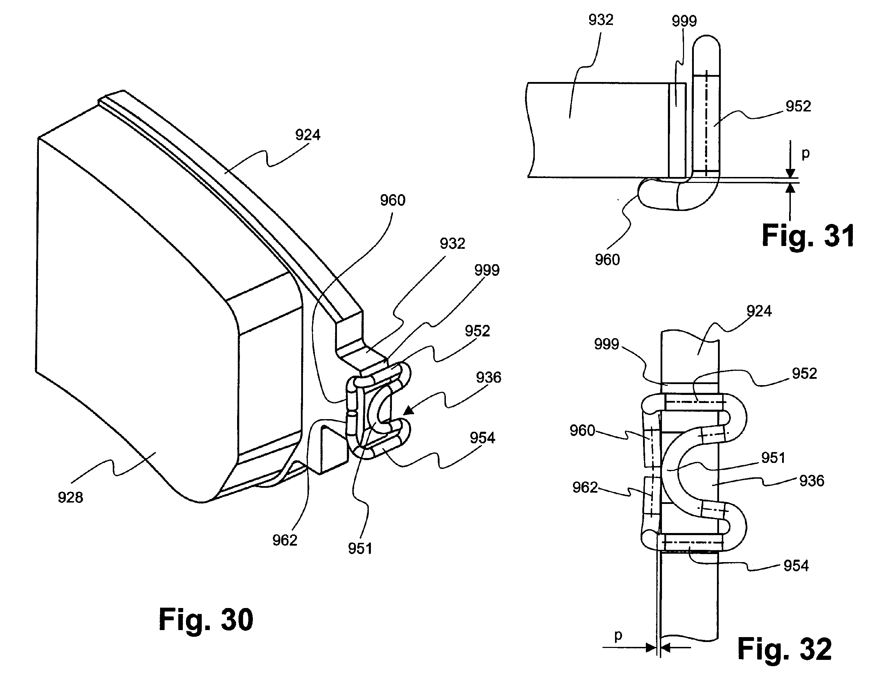

Fig. 30 bis 32 zeigen eine weitere Ausführungsform der Erfindung in verschiedenen Ansichten. Das als Federklammer ausgebildete Federelement 936 ist wiederum im Wesentlichen geschlossen. Der Federweg p wird bereitgestellt durch die beiden Federbügel 960 und 962, die zur Haltezunge 936 schräg angestellt sind, wie in Fig. 31 erkennbar. Die Anlage an korrespondierenden Anlageflächen im Aufnahmebereich erfolgt erneut über die beiden Federstützabschnitte 952 und 954, die im Bereicht von Fasen 999 der Haltezunge 936 laufen. Die Federklammer wird geschlossen über eine Stützschleife 951, die ebenfalls am Aufnahmebereich unter Erzeugung einer Reibungskraft anliegt und so nur dann eine Relativbewegung zwischen Bremsscheibenträger und Scheibenbremsengehäuse zulässt, wenn das Betätigungsspiel p aufgebraucht und eine Kompensation erforderlich ist.

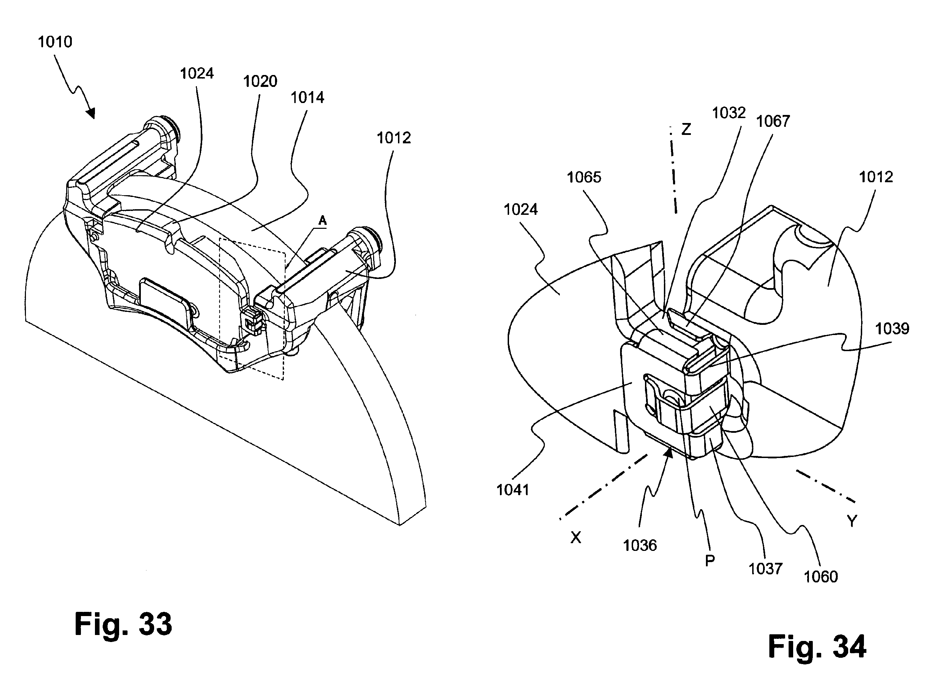

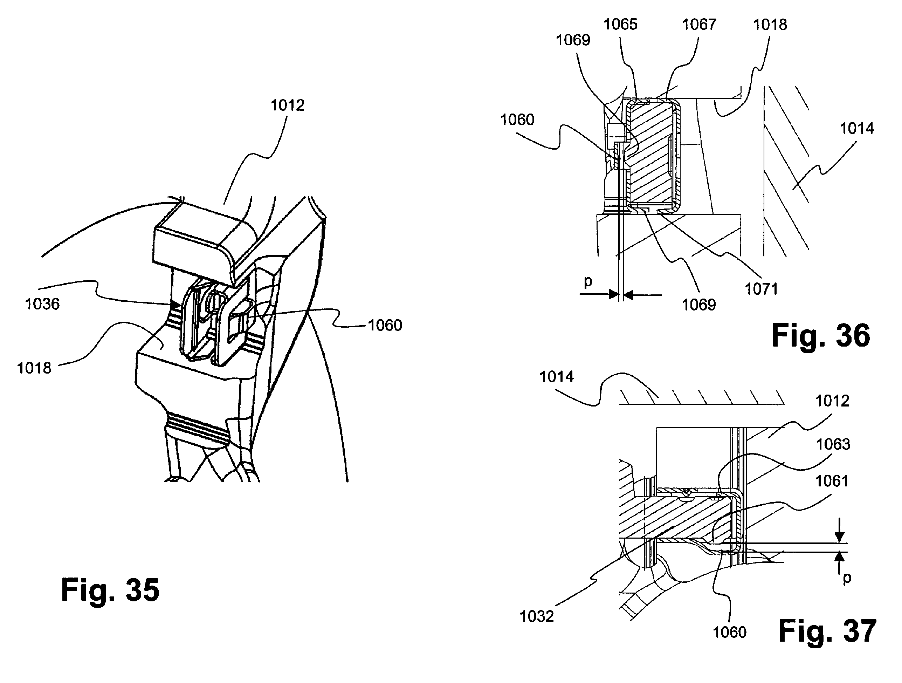

Fig. 33 bis 37 zeigen eine weitere Ausführungsform der Erfindung in verschiedenen Ansichten, wobei der Bremsträger 1012 gezeigt ist, der die Bremsscheibe 1014 umspannt. Fig. 33 zeigt insbesondere, wie der Bremsbelagträger 1024 mit dem Bremsbelag 1020 in dem Bremsträger 1012 aufgenommen ist. Fig. 34 zeigt den in Fig. 33 mit A bezeichneten Bereich in vergrößerter Darstellung, wobei der Bremsbelagträger 1024 in an sich beschriebener Weise eine Haltezunge 1032 aufweist. Diese ist von einem klammerartigen Federelement 1036 aus einem gefalzten Federblech umgeben, welches zwei parallel verlaufende Befestigungsarme 1037, 1039 aufweist, die die Haltezunge 1032 an drei Seiten umgreift und an ihren Enden mit einer Querspange 1041 miteinander verbunden sind. Von der Querspange 1041 aus erstreckt sich eine Federlasche 1060. Die Federlasche 1060 ist derart ausgebildet, dass sie mit Spiel p (siehe Fig. 36) im Abstand zu einem Anlagevorsprung 1061 an der Haltezunge 1032 in dem Ausgangszustand angeordnet ist. An dem der Bremsscheibe 1014 zugewandten Bereich liegt die Federlasche 1060 in einem Anlageabschnitt 1063 in Anlage mit der Haltezunge 1032.

An den beiden Befestigungsarmen 1037, 1039 sind jeweils um die Haltezunge 1032 herum abgewinkelte Klemmfortsätze 1065, 1067, 1069, 1071 vorgesehen, über die der Bremsbelagträger 1024 in dem Aufnahmebereich 1018 unter Haftreibung gehalten wird.

Die Funktionsweise zur Betätigung und Verschleißkompensation ist dieselbe, wie vorstehend beschrieben. Das Spiel p reicht aus, um entgegen der Federwirkung der Federlasche 1060 den Bremsbelagträger 1024 mitsamt dem Bremsbelag 1020 auf die Bremsscheibe 1014 zu zu verlagern und eine Bremsung durchzuführen. Nach Freigabe des Bremsbelagträgers bewegt sich dieser durch die Federwirkung der Federlasche 1060 wieder in seine in den Figuren gezeigte Ausgangsstellung zurück. Mit anderen Worten zieht die Federlasche 1060 den Bremsbelagträger 1024 in seine Ausgangsstellung zurück. Eine Kompensation eines Belagverschleißes wird dadurch erreicht, dass der Bremsbelagträger mit dem Bremsbelag in dem Aufnahmebereich 1018 unter Einwirkung der Bremsbetätigungsvorrichtung bleibend verschoben wird. In der den Belagverschleiß kompensierenden Stellung haftet dann die Federanordnung 1036 wieder, ähnlich wie in den Fig. 36, 37 gezeigt, jedoch in entsprechend der Verschleißkompensation vorgerückter Stellung.

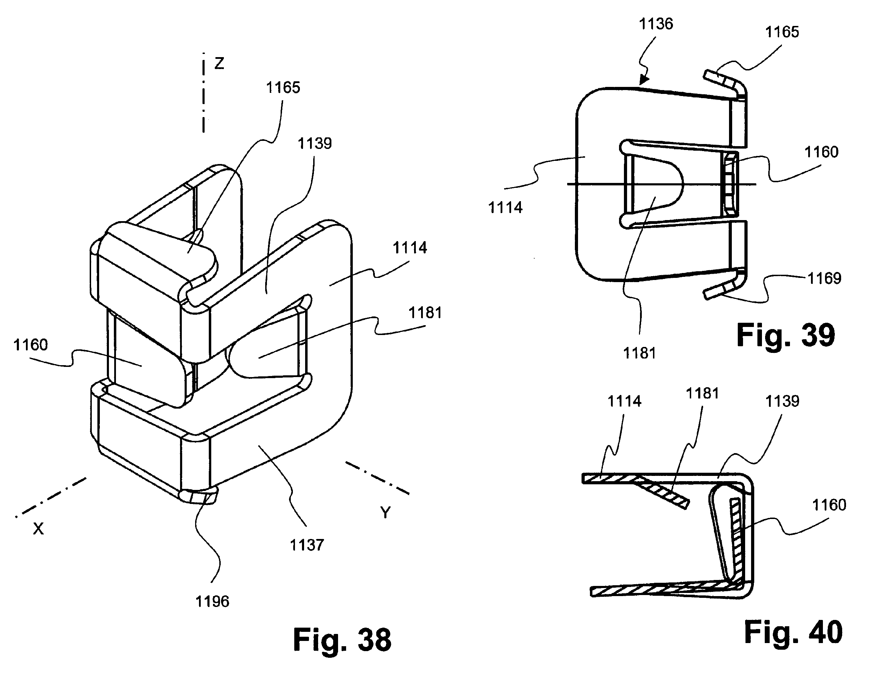

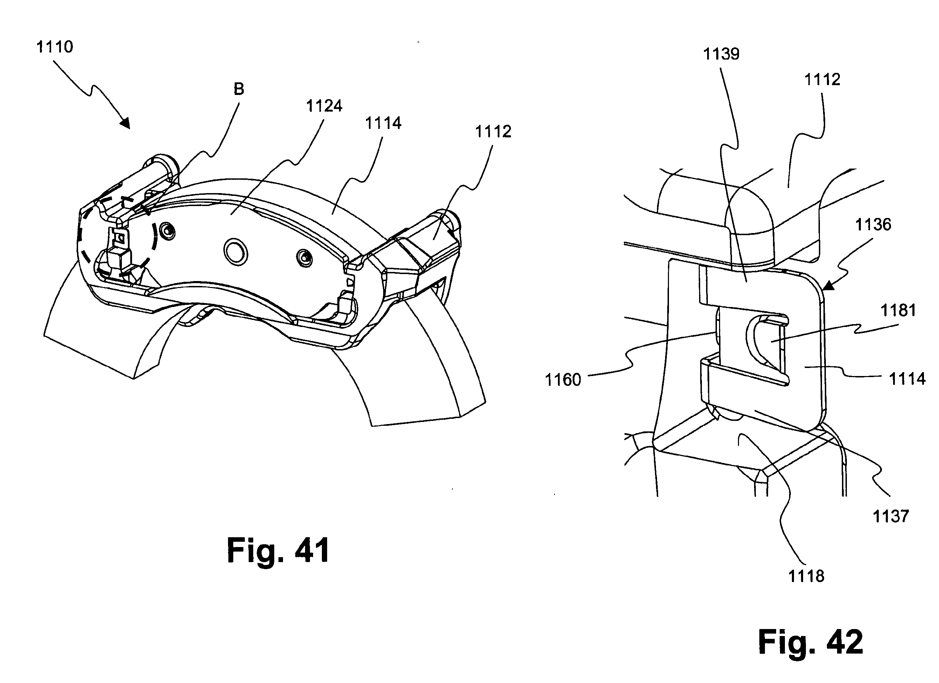

Die Fig. 38 bis 42 zeigen eine weitere Ausführungsform der Erfindung, die im Aufbau und der Funktionsweise ähnlich der Ausführungsform gemäß den Fig. 33 bis 37 ist. Für gleichartig oder gleichwirkende Komponenten werden daher dieselben Bezugszeichen verwendet, jedoch um den Betrag "100" erhöht.

Die Ausführungsform gemäß Fig. 38 bis 41 unterscheidet sich hinsichtlich der Federanordnung 1136 darin, dass diese den Bremsbelagträger 1124 mitsamt dem Bremsbelag nicht in die Ausgangsstellung zurückzieht, sondern in diese zurückdrückt. Hierfür ist die Federlasche 1160 auf der anderen, der Bremsscheibe 1114 zugewandten Seite angeordnet. Wie in den Ansichten gemäß Figuren 38,39 und 40 erkennbar, ist die Federlasche 1160 gegenüber den Haltearmen 1137, 1139 nach innen versetzt und leicht schräg abgewinkelt (siehe Figur 40). Auf der von der Bremsscheibe 1114 abgewandten Gegenseite stützt sich die Federanordnung 1136 mit einem Rückstellarm 1181 an der Haltezunge 1132 ab. Darüber hinaus sind die beiden Haltelaschen 1165 und 1169 an der Stirnseite der beiden Haltearme 1137 und 1139 angeordnet und erstrecken sich schräg von diesen nach oben bzw. nach unten. Die Funktionsweise ist aber an sich dieselbe, wie bereits mit Bezug auf Fig. 33 bis 37 beschrieben, mit Ausnahme der Tatsache, dass ein Zurückdrücken der Bremsbelaganordnung erfolgt.

Insgesamt wird mit sämtlichen Ausführungsformen der Erfindung erreicht, dass definiert zwischen einer normalen Bremsenbetätigung ohne Verschleißkompensation und einer Bremsenbetätigung mit Verschleißkompensation unterschieden werden kann. Erst wenn es zu einer definierten, insbesondere formschlüssigen, Anlage zwischen der Haltezunge und der Federanordnung kommt, das heißt erst dann, wenn das Bewegungsspiel p aufgebraucht ist, tritt eine Verschleißkompensation auf. Dadurch ist gewährleistet, dass - egal bei welchem Verschleißzustand der Bremsbelaganordnungen - eine normale Bremsung immer unter denselben Kraftbedingungen abläuft. Ein verschleißbedingtes Ansteigen der Betätigungskräfte, wie man es aus dem Stand der Technik kennt, tritt bei der Erfindung nicht auf.

Die einzelnen Komponenten der Federanordnung können aus Blechteilen aus Federstahl oder aus Federdraht ausgebildet sein. Die einzelnen Knickstellen sind harmonisch gegründet mit geeigneten Übergangsradien ausgebildet. Dadurch lässt sich die Federsteifigkeit der jeweiligen Federanordnung einstellen.

## Patentansprüche

1. Scheibenbremse (10) für ein Kraftfahrzeug, umfassend eine Führung, in der wenigstens eine Bremsbelaganordnung (20,22) bremswirksam verlagerbar geführt ist, wobei die Bremsbelaganordnung (20,22) einen Bremsbelagträger (24, 26) aufweist, an dem ein Fahrzeugbremsbelag (28, 30) angebracht ist, der mit einer Bremsscheibe (14) zum Erzielen einer Bremswirkung in Wechselwirkung bringbar ist, wobei der Bremsbelagträger (24, 26) wenigstens eine Haltezunge (32, 34) aufweist und wobei die Führung wenigstens einen Aufnahmebereich aufweist, wobei die Haltezunge (32, 34) in dem wenigstens einen Aufnahmebereich in einer Betätigungsrichtung geführt aufnehmbar ist, wobei an der wenigstens einen Haltezunge (32, 34) eine Federanordnung (36, 38) angebracht ist, über die eine Rückstellkraft in Folge einer elastischen Deformation durch bremswirksame Auslenkung der Bremsbelaganordnung (20,22) auf diese aufbringbar ist,
**dadurch gekennzeichnet, dass** die Federanordnung (36, 38) Federstützabschnitte (52, 54) aufweist, mit denen sich die Federanordnung (36, 38) unter Vorspannung in dem Aufnahmebereich (18) abstützt, und dass die Federanordnung (36, 38) einen vorbestimmten Federweg (p) vorgibt, der derart bemessen ist, dass er eine Bewegung des Bremsbelagträgers (24, 26) für eine Bremsenbetätigung ohne Belagverschleiß-Kompensation zulässt, und derart, dass bei Aufbrauchen des vorbestimmten Federwegs (p) die Bremsbelaganordnung (20,22) zur Belagverschleiß-Kompensation in Anlage mit der Federanordnung (36, 38) gelangt und diese innerhalb der Führung belagverschleiß-kompensierend verlagert.

2. Scheibenbremse (10) nach Anspruch 1,
**dadurch gekennzeichnet, dass** die Federanordnung (36, 38) die Haltezunge (32, 34) umgreift, wobei die Federanordnung (36, 38) auf der dem Bremsbelag (28, 30) zugewandten Seite wenigstens einen Anlageabschnitt (56, 58) aufweist, der zumindest abschnittsweise um den vorbestimmten Federweg (p) von der Haltezunge (32, 34) beanstandet ist, wobei vorzugsweise zwischen dem Bremsbelag (28) und der dem Bremsbelag (28, 30) zugewandten Seite der Federanordnung (36, 38) wenigstens ein Federmittel (60, 62) vorgesehen ist.

3. Scheibenbremse nach Anspruch 2,
**dadurch gekennzeichnet, dass** zwischen dem Bremsbelag (628) und der von dem Bremsbelag (628) abgewandten Seite der Federanordnung (636) wenigstens ein Federmittel (692) vorgesehen ist, wobei vorzugsweise das wenigstens eine Federmittel (692) wenigstens einen an der Federanordnung (636), insbesondere am Anlageabschnitt, ausgebildeten Federbügel (60, 160, 260) aufweist, der federnd an der Haltezunge (632) anliegt.

4. Scheibenbremse nach Anspruch 3,
**dadurch gekennzeichnet, dass** der wenigstens eine Federbügel von einer einstückig an der Federanordnung (636) ausgebildeten oder an dieser kraftschlüssig oder formschlüssig befestigten, hervorstehenden Federlasche (692) gebildet ist, wobei vorzugsweise die Federlasche (692) V-förmig ausgebildet ist.

5. Scheibenbremse nach einem der Ansprüche 2 bis 4,
**dadurch gekennzeichnet, dass** die Haltezunge (432) auf ihrer dem Bremsbelag (428) zugewandten Seite mit einem Federhaltemittel (486), insbesondere mit einer Ausnehmung, versehen ist, an dem ein gesondertes Federelement (460) angebracht ist, das sich an der Haltezunge (432) sowie an der Federanordnung (436) abstützt.

6. Scheibenbremse nach Anspruch 5,
**dadurch gekennzeichnet, dass** das wenigstens eine Federmittel (460) von einer Druckfeder oder einer Blattfeder gebildet ist, welche die Haltezunge (432) zumindest teilweise durchsetzt.

7. Scheibenbremse nach Anspruch 2,
**dadurch gekennzeichnet, dass** die Federanordnung (836) in Ausnehmungen (835, 837) der Haltezunge (832) formschlüssig oder kraftschlüssig aufgenommen ist, wobei vorzugsweise die Federanordnung (836) von einer teilweise oder vollständig geschlossenen Federklammer gebildet ist.

8. Scheibenbremse nach Anspruch 3 und 7,
**dadurch gekennzeichnet, dass** der wenigstens eine Federbügel (860, 862) als schleifenförmiger Abschnitt der Federklammer (836) ausgebildet ist.

9. Scheibenbremse (10) nach einem der vorangehenden Ansprüche,
**dadurch gekennzeichnet, dass** die Federanordnung (36, 38) einen Federrücken (50) aufweist, der federnd an der von dem Bremsbelag (28, 30) abgewandten Seite der Haltezunge (32, 34) anliegt, wobei vorzugsweise die Federstützabschnitte (52, 54) an dem Federrücken angebracht sind und sich ausgehend von diesem federnd aufspreizen.

10. Scheibenbremse nach einem der vorangehenden Ansprüche,
**dadurch gekennzeichnet, dass** die Federanordnung (236) wenigstens eine Federzunge (278) aufweist, die die Haltezunge (232) in der Federanordnung (236) unter Vorspannung quer zur Betätigungsrichtung (A) positioniert.

11. Scheibenbremse nach einem der vorangehenden Ansprüche,
**gekennzeichnet durch** eine Sensoranordnung (384), die die Federanordnung (336) sowie den Bremsbelag (328) zumindest teilweise durchsetzt, und die zur Bestimmung des Belagverschleißes ausgebildet ist.

12. Scheibenbremse nach einem der vorangehenden Ansprüche,
**gekennzeichnet durch** ein Stützelement (588), das an der Haltezunge (532) fixiert ist und an der sich die Federanordnung (536) federnd abstützt.

13. Scheibenbremse nach einem der vorangehenden Ansprüche,
**dadurch gekennzeichnet, dass** zwischen der Federanordnung (36, 38) und der Haltezunge (32, 34) auf deren dem Bremsbelag (28, 30) zugewandten Seite ein Füllelement (70), insbesondere ein Füllring, vorgesehen ist.

14. Scheibenbremse nach einem der vorangehenden Ansprüche,
**dadurch gekennzeichnet, dass** die Federanordnung (1036; 1136) die wenigstens eine Haltezunge (1032; 1132) käfigartig umgreift, wobei die Federanordnung (1036; 1136) wenigstens einen Befestigungsarm (1037, 1039; 1137, 1139) und wenigstens eine Querspange (1041; 1141) aufweist, mit denen die Federanordnung haltend an der Haltezunge angreift, wobei vorzugsweise die Federanordnung (1136) eine Rastkralle (1181) zum Positionieren der Federanordnung an der Haltezunge aufweist.

15. Scheibenbremse nach Anspruch 14,
**dadurch gekennzeichnet, dass** die Federanordnung wenigstens einen Klemmfortsatz in (1065, 1067, 1069, 1071; 1165, 1169) aufweist, der zum Verklemmen der Federanordnung an der Haltezunge dient.

16. Bremsbelaganordnung (20,22) für eine Scheibenbremse (10) nach einem der vorangehenden Ansprüche, wobei die Bremsbelaganordnung (20,22) einen Bremsbelagträger (24, 26) aufweist, an dem ein Fahrzeugbremsbelag (28, 30) angebracht ist, wobei der Bremsbelagträger (24, 26) wenigstens eine Haltezunge (32, 34) aufweist, wobei die Haltezunge (32, 34) in wenigstens einem Aufnahmebereich (18) in einer Betätigungsrichtung geführt aufnehmbar ist, wobei an der wenigstens einen Haltezunge (32, 34) eine Federanordnung (36, 38) angebracht ist, über die eine Rückstellkraft in Folge einer elastischen Deformation durch bremswirksame Auslenkung der Bremsbelaganordnung (20,22) auf diese aufbringbar ist,
**dadurch gekennzeichnet, dass** die Federanordnung (36, 38) Federstützabschnitte (52, 54) aufweist, mit denen sich die Federanordnung (36, 38) unter Vorspannung in dem Aufnahmebereich (18) abstützt, und dass die Federanordnung (36, 38) einen vorbestimmten Federweg (p) vorgibt, der derart bemessen ist, dass er eine Bewegung des Bremsbelagträgers (24, 26) für eine Bremsenbetätigung ohne Belagverschleiß-Kompensation zulässt und derart, dass bei Aufbrauchen des vorbestimmten Federwegs (p) die Bremsbelaganordnung (20,22) zur Belagverschleiß-Kompensation in Anlage mit der Federanordnung (36, 38) gelangt und diese innerhalb der Führung belagverschleiß-kompensierend verlagert.

## Claims

1. Disc brake (10) for a motor vehicle, comprising a guide, in which at least one brake pad arrangement (20, 22) is moveably guided for achieving a brake effect, wherein the brake pad arrangement (20, 22) has a brake pad carrier (24, 26), on which a vehicle brake pad (28, 30) is mounted, which can be brought into interaction with a brake disc (14) for achieving a brake effect, wherein the brake pad carrier (24, 26) has at least one mounting tongue (32, 34) and wherein the guide has at least one receiving region, wherein the mounting tongue (32, 34) is receivable in the at least one receiving region such that it is guided in an actuation direction, wherein a spring arrangement (36, 38) is mounted on the at least one mounting tongue (32, 34), by means of which spring arrangement a return force due to an elastic deformation caused by a deflection of the brake pad arrangement (20, 22) in order to achieve a brake effect can be applied thereon,
**characterized in that** the spring arrangement (36, 38) has spring support sections (52, 54), by means of which the spring arrangement (36, 38) is supported in a biased state in the receiving region (18), and that the spring arrangement (36, 38) provides a predetermined spring travel (p), which is dimensioned such that a movement of the brake pad carrier (24, 26) for actuating the brake is permitted without brake pad wear compensation and such that when using up the predetermined spring travel (p) the brake pad arrangement (20, 22) contacts the spring arrangement (36, 38) for brake pad wear compensation and moves the latter within the guide in order to compensate brake pad wear.

2. Disc brake (10) according to Claim 1,
**characterized in that** the spring arrangement (36, 38) embraces the mounting tongue (32, 34), the spring arrangement (36, 38) having, on the side facing the brake pad (28, 30), at least one abutment section (56, 58) which is spaced, at least in sections, by the predetermined spring travel (p) from the mounting tongue (32, 34), wherein, preferably, at least one spring means (60, 62) is provided between the brake pad (28) and the side of the spring arrangement (36, 38) facing the brake pad (28, 30).

3. Disc brake according to Claim 2,
**characterized in that** at least one spring means (692) is provided between the brake pad (628) and the side of the spring arrangement (636) facing away from the brake pad (628), wherein, preferably, the at least one spring means (692) has at least one spring shackle (60, 160, 260) which is formed on the spring arrangement (636), in particular on the abutment section, and bears resiliently against the mounting tongue (632).

4. Disc brake according to Claim 3,
**characterized in that** the at least one spring shackle is formed by a protruding spring tab (692) which is formed in one piece on the spring arrangement (636) or fastened in a force-fitting or form-fitting manner thereto, wherein, preferably, the spring tab (692) is of V-shaped form.

5. Disc brake according to one of Claims 2 to 4,
**characterized in that** the mounting tongue (432) is provided, on its side facing the brake pad (428), with a spring holding means (486), in particular with a recess, on which means is mounted a separate spring element (460) which is supported against the mounting tongue (432) and against the spring arrangement (436).

6. Disc brake according to Claim 5,
**characterized in that** the at least one spring means (460) is formed by a compression spring or a leaf spring which passes through the mounting tongue (432) at least partially.

7. Disc brake according to Claim 2,
**characterized in that** the spring arrangement (836) is received in a form-fitting or force-fitting manner in recesses (835, 837) of the mounting tongue (832), wherein, preferably, the spring arrangement (836) is formed by a partially or completely closed spring clip.

8. Disc brake according to one of Claims 3 and 7,
**characterized in that** the at least one spring shackle (860, 862) is formed as a loop-shaped section of the spring clip (836).

9. Disc brake (10) according to one of the preceding claims,
**characterized in that** the spring arrangement (36, 38) has a spring back (50) which bears resiliently against the side of the mounting tongue (32, 34) facing away from the brake pad (28, 30), wherein, preferably, the spring support sections (52, 54) are attached to the spring back and spread out resiliently starting from said back.

10. Disc brake according to one of the preceding claims,
**characterized in that** the spring arrangement (236) has at least one spring tongue (278) which positions the mounting tongue (232) in the spring arrangement (236) in a biased state transversely to the actuation direction (A).

11. Disc brake according to one of the preceding claims,
**characterized by** a sensor arrangement (384) which passes through the spring arrangement (336) and the brake pad (328) at least partially, and which is designed to determine the pad wear.

12. Disc brake according to one of the preceding claims,
**characterized by** a support element (588) which is fixed on the mounting tongue (532) and against which the spring arrangement (536) is resiliently supported.

13. Disc brake according to one of the preceding claims,
**characterized in that** a filling element (70), in particular a filling ring, is provided between the spring arrangement (36, 38) and the mounting tongue (32, 34) on the side of the latter facing the brake pad (28, 30).

14. Disc brake according to one of the preceding claims,
**characterized in that** the spring arrangement (1036; 1136) embraces the at least one mounting tongue (1032; 1132) in a cage-like manner, the spring arrangement (1036; 1136) having at least one fastening arm (1037, 1039; 1137, 1139) and at least one transverse clasp (1041; 1141), with which the spring arrangement engages in a holding manner on the mounting tongue, wherein, preferably, the spring arrangement (1136) has a catch claw (1181) for positioning the spring arrangement on the mounting tongue.

15. Disc brake according to Claim 14,
**characterized in that** the spring arrangement has at least one clamping extension (1065, 1067, 1071; 1165, 1169) which serves for clamping the spring arrangement on the mounting tongue.

16. Brake pad arrangement (20, 22) for a disc brake according to one of the preceding claims, wherein the brake pad arrangement (20, 22) has a brake pad carrier (24, 26), on which a vehicle brake pad (28, 30) is mounted, wherein the brake pad carrier (24, 26) has at least one mounting tongue (32, 34), wherein the mounting tongue (32, 34) is receivable in at least one receiving region (18) such that it is guided in an actuation direction, wherein a spring arrangement (36, 38) is mounted on the at least one mounting tongue (32, 34), by means of which spring arrangement a return force due to an elastic deformation caused by a deflection of the brake pad arrangement (20, 22) in order to achieve a brake effect can be applied thereon,
**characterized in that** the spring arrangement (36, 38) has spring support sections (52, 54), by means of which the spring arrangement (36, 38) is supported in a biased state in the receiving region (18), and that the spring arrangement (36, 38) provides a predetermined spring travel (p), which is dimensioned such that a movement of the brake pad carrier (24, 26) for actuating the brake is permitted without brake pad wear compensation and such that when using up the predetermined spring travel (p) the brake pad arrangement (20, 22) contacts the spring arrangement (36, 38) for brake pad wear compensation and moves the latter within the guide in order to compensate brake pad wear.

## Revendications

1. Frein à disque (10) pour un véhicule automobile, comprenant un guidage dans lequel est guidé de manière mobile au moins un ensemble de garniture de frein (20, 22) de manière à générer un effet de freinage, cet ensemble de garniture de frein (20, 22) présentant un patin de frein (24, 26) sur lequel est montée une garniture de frein de véhicule (28, 30) pouvant interagir avec un disque de frein (14) afin de générer un effet de freinage, le patin de frein (24, 26) présentant au moins une languette de retenue (32, 34), et le guidage, au moins une zone de logement, ladite languette de retenue (32, 34) pouvant être logée dans ladite zone de logement en étant guidée dans une direction d'actionnement, et un ensemble ressort (36, 38), qui permet d'exercer une force de rappel sur ledit ensemble de garniture de frein suite à une déformation élastique due à une déviation de l'ensemble de garniture de frein (20, 22) générant un effet de freinage, étant monté sur ladite languette de retenue, **caractérisé en ce que** l'ensemble ressort (36, 38) présente des sections de support de ressort (52, 54) au moyen desquelles l'ensemble ressort (36, 38) maintenu sous précontrainte repose dans la zone de logement (18) et **en ce que** l'ensemble ressort (36, 38) présente une course élastique prédéterminée (p) dimensionnée de manière à permettre un déplacement du patin de frein (24, 26) pour un actionnement du frein sans compensation de l'usure de la garniture, et de telle sorte que, à la fin de la course élastique prédéterminée (p), l'ensemble de garniture de frein (20, 22) vient en appui contre l'ensemble ressort (36, 38) afin de compenser l'usure de la garniture et déplace l'ensemble ressort dans le guidage de manière à compenser l'usure de la garniture.

2. Frein à disque (10) selon la revendication 1,
**caractérisé en ce que** l'ensemble ressort (36, 38) entoure la languette de retenue (32, 34), l'ensemble ressort (36, 38) présentant sur le côté tourné vers la garniture de frein (28, 30) au moins une section d'appui (56, 58) qui est pour le moins partiellement espacée de la languette de retenue (32, 34) par une distance égale à la course élastique prédéterminée (p), au moins un moyen élastique (60, 62) étant prévu préférentiellement entre la garniture de frein (28) et le côté de l'ensemble ressort (36, 38) tourné vers la garniture de frein (28, 30).

3. Frein à disque selon la revendication 2,
**caractérisé en ce qu'**au moins un moyen élastique (692) est prévu entre la garniture de frein (628) et le côté de l'ensemble ressort (636) opposé à la garniture de frein (628), préférentiellement ledit moyen élastique (692) présentant au moins un étrier élastique (60, 160, 260) qui est formé sur l'ensemble ressort (636), en particulier sur la section d'appui, et qui se trouve en contact élastique avec celui-ci.

4. Frein à disque selon la revendication 3,
**caractérisé en ce que** ledit étrier élastique est formé par une patte élastique (692) saillante réalisée d'un seul tenant sur l'ensemble ressort (636) ou fixée sur celui-ci par complémentarité de forme ou de force, préférentiellement la patte élastique (692) étant réalisée en forme de V.

5. Frein à disque selon l'une des revendications 2 à 4,
**caractérisé en ce que** la languette de retenue (432) est pourvue sur son côté tourné vers la garniture de frein (428) d'un moyen de retenue de ressort (486), en particulier d'un évidement sur lequel est monté un élément ressort (460) distinct qui s'appuie sur la languette de retenue (432) ainsi que sur l'ensemble ressort (436).

6. Frein à disque selon la revendication 5,
**caractérisé en ce que** ledit élément ressort (460) est formé par un ressort de compression ou un ressort à lame qui traverse au moins partiellement la languette de retenue (432).

7. Frein à disque selon la revendication 2
**caractérisé en ce que** l'ensemble ressort (836) est logée par coopération de forme ou de force dans des évidements (835, 837) de la languette de retenue (832), préférentiellement l'ensemble ressort (836) étant formé par une agrafe élastique partiellement ou entièrement fermée.

8. Frein à disque selon les revendications 3 et 7,
**caractérisé en ce que** ledit étrier élastique (860, 862) est formé sous forme de segment en forme de boucle de l'agrafe élastique (836).

9. Frein à disque (10) selon l'une des revendications précédentes,
**caractérisé en ce que** l'ensemble ressort (36, 38) présente un dos élastique (50) qui repose de manière élastique sur le côté de la languette de retenue (32, 34) opposé à la garniture de frein (28, 30), préférentiellement les sections de support de ressort (52, 54) étant montées sur le dos élastique et s'écartant de manière élastique à partir de celui-ci.

10. Frein à disque selon l'une des revendications précédentes,
**caractérisé en ce que** l'ensemble ressort (236) présente au moins une languette élastique (278) qui positionne dans l'ensemble ressort (234) la languette de retenue (232) sous contrainte et perpendiculairement au sens d'actionnement (A).

11. Frein à disque selon l'une des revendications précédentes,
**caractérisé par** un ensemble de capteurs (384) qui traverse pour le moins partiellement l'ensemble ressort (336) et la garniture de frein (328), et qui est conçu pour déterminer l'usure de la garniture.

12. Frein à disque selon l'une des revendications précédentes,
**caractérisé par** un élément de support (588) qui est fixé à la languette de retenue (532) et s'appuie de manière élastique sur l'ensemble ressort (536).

13. Frein à disque selon l'une des revendications précédentes,
**caractérisé en ce qu'**un élément de remplissage, en particulier un anneau de remplissage, est prévu entre l'ensemble ressort (36, 38) et la languette de retenue (32, 34) sur le côté de celle-ci tourné vers la garniture de frein (28, 30).

14. Frein à disque selon l'une des revendications précédentes,
**caractérisé en ce que** l'ensemble ressort (1036 ; 1136) entoure à la manière d'une cage ladite languette de retenue (1032 ; 1132), l'ensemble ressort (1036 ; 1136) présentant au moins un bras de fixation (1037, 1039 ; 1137, 1139) et au moins une tige transversale (1041 ; 1141) à l'aide desquels l'ensemble ressort agit par maintien sur la languette de retenue, préférentiellement l'ensemble ressort (1136) présentant une griffe d'encliquetage (1181) pour positionner l'ensemble ressort sur la languette de retenue.

15. Frein à disque selon la revendication 14,
**caractérisé en ce que** l'ensemble ressort présente au moins un téton de blocage (1065, 1067, 1069 ; 1165, 1169) servant à bloquer l'ensemble ressort sur la languette de retenue.

16. Ensemble de garniture de frein (20, 22) pour un frein à disque (10) selon une des revendications précédentes, cet ensemble de garniture de frein (20, 22) présentant un patin de frein (24, 26) sur lequel est montée une garniture de frein de véhicule (28, 30), le patin de frein (24, 26) présentant au moins une languette de retenue (32, 34), ladite languette de retenue (32, 34) pouvant être logée dans au moins une zone de logement (18) en étant guidée dans une direction d'actionnement, un ensemble ressort (36, 38),
qui permet d'exercer une force de rappel sur ledit ensemble de garniture de frein suite à une déformation élastique due à une déviation de l'ensemble de garniture de frein (20, 22) générant un effet de freinage, étant monté sur ladite languette de retenue (32, 34),
**caractérisé en ce que** l'ensemble ressort (36, 38) présente des sections de support de ressort (52, 54) au moyen desquelles l'ensemble ressort (36, 38) maintenu sous précontrainte repose dans la zone de logement (18), et **en ce que** l'ensemble ressort (36, 38) présente une course élastique prédéterminée (p) dimensionnée de manière à permettre un déplacement du patin de frein (24, 26) pour un actionnement du frein sans compensation de l'usure de la garniture, et de telle sorte que, à la fin de la course élastique prédéterminée (p), l'ensemble de garniture de frein (20) vient en appui contre l'ensemble ressort (36, 38) afin de compenser l'usure de la garniture et déplace l'ensemble ressort dans le guidage de manière à compenser l'usure de la garniture.
